# EUROPEAN PATENT SPECIFICATION

(11) **EP 2 048 821 B1**
(45) Date of publication and mention of the grant of the patent: **14.03.2012**
(21) Application number: 07764268.4
(22) Date of filing: 23.07.2007
(51) Int. Cl.: H04L 12/24, H04L 12/26

(54) **SERVICE TRACING CONTROL METHOD AND SERVICE TRACING SYSTEM AND THE RELATED TRACING DEVICE**
DIENST-TRACING-STEUERVERFAHREN UND DIENST-TRACING-SYSTEM UND DIESBEZÜGLICHE TRACING-EINRICHTUNG
PROCÉDÉ DE COMMANDE DE TRAÇAGE DE SERVICE ET SYSTÈME DE TRAÇAGE DE SERVICE ET LE DISPOSITIF DE TRAÇAGE ASSOCIÉ

(30) Priority: 31.07.2006 CN 200610104038
(43) Date of publication of application: 15.04.2009
(73) Proprietor: Huawei Technologies Co., Ltd., Shenzhen, Guangdong Province 518129 (CN)
(72) Inventor: XU, Wenhua, Shenzhen, Guangdong Province 518129 (CN); LI, Yan, Shenzhen, Guangdong Province 518129 (CN); TANG, Jie, Shenzhen, Guangdong Province 518129 (CN); SHI, Xiaomin, Shenzhen, Guangdong Province 518129 (CN)
(74) Representative: Pfenning, Meinig & Partner GbR
(86) International application number: PCT/CN2007/070341
(87) International publication number: WO 2008/017263

(56) References cited:
- CN-A- 1 722 675
- US-A1- 2002 007 468
- US-A1- 2005 289 167
- US-B1- 6 272 515
- OPEN MOBILE ALLIANCE: "OMA Service Provider Environment Requirements Candidate Version 1.0 ? 14 Jun 2005"[Online] 14 June 2005 (2005-06-14), XP002538177 Retrieved from the Internet: URL:http://www.openmobilealliance.org/Tech nical/release_program/docs/RD/OMA-RD-OSPE- V1_0-20050614-C.pdf> [retrieved on 2009-07-20]

## Description

This application claims a priority from the Chinese Patent Application No. 200610104038.9, filed with the Chinese Patent Office on July 31, 2006 and entitled "Service Tracing Control Method, Service Tracing System and Relevant Tracing Apparatus", the contents of which are incorporated herein by reference in their entirety.

### FIELD OF THE INVENTION

The present invention relates to the field of communication technologies, and in particular, to a service tracing control method, a service tracing system and a relevant tracing apparatus.

### BACKGROUND

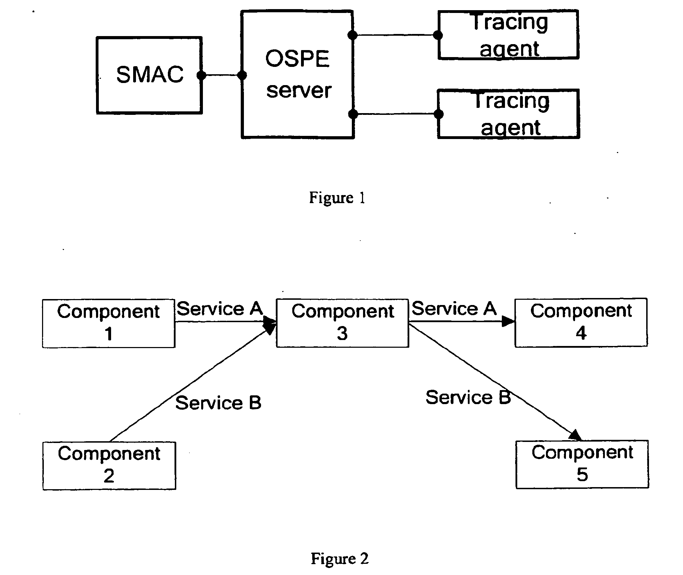

With the development of the communication technology and the increase of service types, the Open Mobile Alliance, OMA, puts forward an OMA Service Provider Environment ,OSPE, system for managing and maintaining service lifecycles and tracing services. The OSPE system serves to perform unified management for different services, including deployment, cancellation, tracing and monitoring of the services. As one of the important functions of an OSPE system, the service tracing function analyzes and locates faults. Currently, the system architecture related to service tracing in an OSPE is shown in Figure 1, and includes three parts:
OSPE server is a server that manages service tracing. An OSPE server receives the service tracing control requests from the OSPE requester, including the request of activating service tracing function and the request of deactivating service tracing function; controls a tracing agent to activate and deactivate service tracing function, and receives tracing logs from the tracing agent;
Service Model And Catalogue, SMAC, is a database that manages and maintains service models and catalog data. A SMAC stores service data, component data and the dependency between them. An OSPE server may obtain relevant service information from the SMAC through query commands; and
tracing agent is a module deployed on the traced component to handle service tracing. The tracing agent is controlled by an OSPE server, and may receive service tracing control commands, including at least a command of activating service tracing and a command of deactivating service tracing.

Based on the foregoing OSPE system architecture, the process of activating the service tracing function is:
1. The OSPE requester sends a request of activating the service tracing function to the OSPE server. The request carries the requested service and the function control requirement related to the service. For the request of activating the service tracing function, the function control requirement related to the service is "to activate the tracing function".
2. The OSPE server queries the SMAC about the service dependency , obtains the services related to this service and the components required for the service. Such components are known as related component of the service.
3. The SMAC returns the related component required for tracing the service to the OSPE server.
4. The OSPE server sends a command of activating the service tracing function to the tracing agents of all related component. The command corresponds to the service tracing control request of the OSPE requester, and carries the service to be traced and the function control requirements related to the service.
5. The tracing agent of the related component returns a confirmation to the OSPE server.
6. The OSPE server returns a result of activating the function to the OSPE requester.

The process of deactivating the service tracing function is similar, after receiving a request of deactivating the service tracing function, the OSPE server queries and knows the related component of the service, and then sends a command of deactivating the service tracing function to the tracing agents of all related component to deactivate the tracing function.

The processes of activating and deactivating the service tracing function mentioned above may result in a component control conflict. For example, as shown in Figure 2, the tracing of service A requires components 1, 3 and 4; the tracing of service B requires components 2, 3 and 5. After the tracing function request of service A is sent and activated, components 1, 3 and 4 have activated the tracing function. Afterward, if a command is sent to activate the tracing function of service B, components 2, 3 and 5 need to be activated; and component 3 encounters "conflict of activating". If a command is sent to deactivate the tracing function of service B after the tracing functions of services A and B are activated successfully, it is equivalent to deactivating the tracing functions of components 2, 3 and 5; and the tracing of service A is impossible for lack of component 3. In this case, component 3 encounters "conflict of deactivating".
Open Mobile Alliance "OMA Service Provider Environment Requirements candidate version" defines the user cases and requirements for the OSPE. The service provider environment provides information as to what components are in the environment which are potentially reusable across different applications. When the service provider tests the pre-scripted service, each service test initiates service level tracing for each service that it invokes and the logged service level trace information from all nodes is retrieved. When a device is marked by the service provider, any calls/sessions invoked from that device initiates service level tracing until the service provider unmarks the device.
US 6272515B1 discloses a method of scheduling distributed transactions, which identifies other transactions in process of execution, operations activated or waiting to be activated of the transactions that conflict with a particular operation of the current transaction. When such a conflict is detected, the particular conflicting operations are delayed by using a counter the value of which is indicative of the number of operations conflicting with the particular operation.
JP 2002229808 A discloses that the Java applet activated by the terminal equipment 30-1 through 30-n of the client server system is registered on a terminal information table 13a, and whether the Java applet included in the HTTP message transmitted to the terminal equipment 30-1 through 30-n from a Web server 20 is registered on the terminal information table 13a or not is confirmed. When the Java applet is registered on the terminal information table 13a, the Java applet is not transmitted to the terminal equipment of sendees, and an error message is transmitted, thereby the problem of a conflict of processes caused by the duplicated activation of the same Java applet on one terminal equipment can be solved.

### SUMMARY

A service tracing control method, a service tracing system, and a relevant tracing apparatus are provided in embodiments of the present invention, thus a conflict of activating and deactivating the tracing function of components may be avoided.

A method for controlling service tracing in an embodiment of the present invention includes:
receiving service tracing control requests which specifies a function control requirement related to the service;
querying the dependency of the requested service to obtaining the information of related component of the requested service;
when the service tracing control request specifies the function control requirement related to the service "activating the tracing function",
performing (A3) a conflict detection for the related component according to the information of related component and the function control requirement related to the service and judging whether the function control requirement "activating the tracing function" conflicts with the current tracing status of the related component, wherein the related component are divided into conflicting component whose tracing function is activated and non-conflicting component whose tracing function is deactivated according to the detection result;
not sending a command of activating the tracing function to the related component whose tracing function is already activated; and sending (A41) a command of activating the tracing function to the related component whose tracing function is deactivated, executing (A51) the command of activating the tracing function for the corresponding component to activate the tracing function of the component;
when the service tracing control request specifies the function control requirement related to the service "deactivating the tracing function",
performing (B3) a conflict detection for the related component according to the information of related component and the function control requirement related to the service, and judging whether the function control requirement "deactivating the tracing function" conflicts with the current tracing status of the related component, wherein the related component are divided into conflicting component whose tracing function is used by multiple tracing requests and non-conflicting component whose tracing function is used by one tracing request according to the detection result;
not sending a command of deactivating the tracing function to the related component whose tracing function is used by multiple tracing requests; and sending (B41) a command of deactivating the tracing function to the related component whose tracing function is used by one tracing request, executing (B51) the command of deactivating the tracing function for the corresponding component to deactivate the tracing function of the component.

Another method for controlling service tracing in an embodiment of the present invention includes:
receiving service tracing control requests which specifies a function control requirement related to the service;
querying the dependency of the requested service to obtaining the information of related component of the requested service;
sending a service tracing control command to the corresponding related component;
when the service tracing control request specifies the service-related function control requirement "activating the tracing function",
performing (C4) a conflict detection for the related component according to the command of activating the tracing function, and judging whether the function control requirement "activating the tracing function" conflicts with the current tracing status of the related component, wherein if the tracing function of the component is activated, the conflict exists; if the tracing function of the component is deactivated, no conflict exists
not executing the command of activating the tracing function on the related component whose tracing function is already activated; and executing (C51) the command of activating the tracing function on the related component whose tracing function is deactivated;
when the service tracing control request specifies the service-related function control requirement "deactivating the tracing function",
performing (D4) a conflict detection for the related component according to the command of deactivating the tracing function, and judging whether the function control requirement "deactivating the tracing function" conflicts with the current tracing status of the related component, wherein if the tracing function of the component is used by multiple tracing requests, the conflict exists; if the tracing function of the component is used by one tracing request, no conflict exists;
not executing the command of deactivating the tracing function on the related component whose tracing function is used by multiple tracing requests; and executing (D51) the command of deactivating the tracing function on the related component whose tracing function is used by one tracing request.

A tracing system provided in an embodiment of the present invention, includes a tracing control server, a service database, a tracing agent and a Tracing Conflict Management (TCM) module.
The tracing control server is adapted to: receive service tracing control requests which specifies a function control requirement related to the service, the service tracing control requests including a request of activating the service tracing function or a request of deactivating the service tracing function; send a request of querying dependency of the requested service to the service database, to obtain information of related component of the requested service: send a conflict detection request to the TCM, the conflict detection request carrying the information of the related component and function control requirement related to the service in the service tracing control request, and send a service tracing control command to the tracing agent of the related component detected as non-conflicting by the TCM and feed back received result of executing the service tracing control command to the TCM; not to send service tracing control command to the related component detected as conflicting by the TCM.
The service database is adapted to query a dependency of a requested service to provide the tracing control server with information of related component of the service after receiving the query request from the tracing control server.
The TCM is adapted to receive a conflict detection request carrying the information of the related component and the function control requirement related to the service in the service tracing control request; detect whether the function control requirement in the service tracing control request conflict with the current tracing status of the related component of the service to divide the list of the related component sent by the tracing control server into two new lists, a list of conflicting component and a list of non-conflicting component after the conflict detection, wherein for a tracing control request of the activating type, the two lists refer to a list of conflicting components whose tracing function is activated and a list of non-conflicting components whose tracing function is deactivated; for a tracing control request of the deactivating type, the two lists refer to a list of conflicting components whose tracing function is used by multiple tracing requests and a list of non-conflicting components whose tracing function is used by one tracing request; and feed back the detection result which carries the non-conflicting component to the tracing control server ;
the tracing agent is adapted to perform the service tracing control for the corresponding component according to the service tracing control command sent by the tracing control server; and feed back the result of executing the service tracing control command..

A tracing control server provided in an embodiment of the present invention includes a tracing control module and a TCM ;
The tracing control module is adapted to: receive service tracing control requests which specifies a function control requirement related to the service; query to obtain information of related component of the requested service; send the information of related component of the service and the function control requirements in the service tracing control request to the TCM ; and send a service tracing control command to the related component detected as non-conflicting by the TCM and feed back received result of executing the service tracing control command to the TCM; not send service tracing control command to the related component detected as conflicting by the TCM.
The TCM is adapted to detect whether the function control requirement in the service tracing control request conflict with the current tracing status of the related component of the service, to divide the list of the related component into two groups, a list of conflicting component and a list of non-conflicting component after the conflict detection, wherein for a tracing control request of the activating type, the two lists refer to a list of conflicting components whose tracing function is activated and a list of non-conflicting components whose tracing function is deactivated; for a tracing control request of the deactivating type, the two lists refer to a list of conflicting components whose tracing function is used by multiple tracing requests and a list of non-conflicting components whose tracing function is used by one tracing request; and feed back the detection results that carry the information of non-conflicting related component to the tracing control module.

A tracing agent set in a component in an embodiment of the present invention includes a tracing processing module and a TCM.
The tracing processing module is adapted to: receive service tracing control commands; send the function control requirements in the service tracing control command to the TCM ; and execute the service tracing control command and feed back the result of executing the service tracing control command to the TCM if the detection result fed back by the TCM indicates no conflict, and not execute the service tracing control command if the detection result indicates a conflict.
The TCM is adapted to detect whether the function control requirement in the service tracing control request conflict with the current tracing status of the components, to divide the list of the related component into two groups, a list of conflicting component and a list of non-conflicting component after the conflict detection, wherein for a tracing control request of the activating type, the two lists refer to a list of conflicting components whose tracing function is activated and a list of non-conflicting components whose tracing function is deactivated; for a tracing control request of the deactivating type, the two lists refer to a list of conflicting components whose tracing function is used by multiple tracing requests and a list of non-conflicting components whose tracing function is used by one tracing request; and feed back the detection results carrying non-conflicting component to the tracing processing module.

According to the embodiments of the present invention, the conflict detection is performed before performing the service tracing control on the components. The components with different tracing status are handled differentially according to the result of the conflict detection, thus the conflict in the case of activating and deactivating the component tracing function is overcome.

### BRIEF DESCRIPTION OF THE DRAWINGS

Figure 1 shows a schematic structural diagram of an OSPE system in present;

Figure 2 shows a schematic diagram of a component control conflict according to a tracing method in present;

Figure 3 shows a schematic flow of a method for activating the service tracing function according to the first embodiment of the present invention;

Figure 4 shows a schematic flowchart of a method for deactivating the service tracing function according to the second embodiment of the present invention;

Figure 5 shows a schematic flowchart of a method for activating the service tracing function according to the third embodiment of the present invention;

Figure 6 shows a schematic flowchart of a method for deactivating the service tracing function according to the fourth embodiment of the present invention;

Figure 7 shows a schematic structural diagram of an OSPE system according to the fifth embodiment of the present invention;

Figure 8 shows a schematic signaling flow in which the OSPE system in the fifth embodiment executes the method in the first embodiment of the present invention;

Figure 9 shows a schematic structural diagram of an OSPE system in the sixth embodiment of the present invention;

Figure 10 shows a schematic signaling flow in which the OSPE system in the sixth embodiment executes the method in the second embodiment of the present invention;

Figure 11 shows a schematic structural diagram of an OSPE system in the seventh embodiment of the present invention;

Figure 12 shows a schematic signaling flow in which the OSPE system in the seventh embodiment executes the method in the first embodiment of the present invention;

Figure 13 shows a schematic structural diagram of an SMAC in the eighth embodiment of the present invention;

Figure 14 shows a schematic structural diagram of an OSPE system that adopts the SMAC in the eighth embodiment of the present invention;

Figure 15 shows a schematic signaling flow in which the OSPE system in Figure 14 executes the method in the second embodiment of the present invention;

Figure 16 shows a schematic structural diagram of an OSPE server in the ninth embodiment of the present invention;

Figure 17 shows a schematic structural diagram of an OSPE system includes the OSPE server in the ninth embodiment of the present invention;

Figure 18 shows a schematic signaling flow in which the OSPE system in Figure 17 executes the method in the second embodiment of the present invention;

Figure 19 shows a schematic st ructural diagram of a tracing agent in the tenth embodiment of the present invention;

Figure 20 shows a schematic structural diagram of an OSPE system includes the tracing agent in the tenth embodiment of the present invention; and

Figure 21 shows a schematic signaling flow in which the OSPE system in Figure 20 executes the method in the first embodiment of the present invention.

### DETAILED DESCRIPTION

A service tracing control method is provided in an embodiment of the present invention, which performs a conflict detection before sending or executing a tracing control command to a component, so as to handle the components with different tracing status differentially, thereby avoiding control conflict for the components, such as "conflict of activating a service tracing function" and "conflict of deactivating a service tracing function". The service tracing control method is applicable to the process of activating the service tracing function and the process of deactivating the service tracing function. Conflict detection may be performed in the command generation stage or the command execution stage in the control process. The two processes are almost same , includes: receiving control requests, querying service information, performing conflict detection, and handling the components with different status differentially. The two processes vary in the specific control command and the corresponding control operation, as elaborated separately below.

The present invention is hereinafter described in detail with reference to embodiments and accompanying drawings.

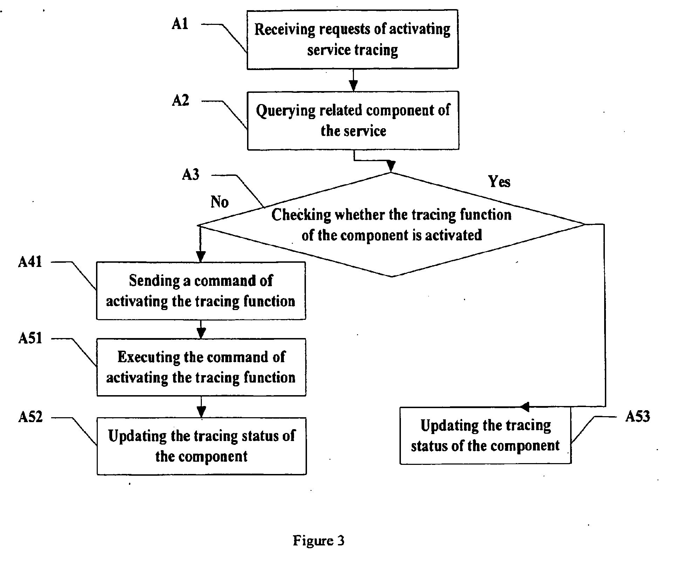

Figure 3 illustrates a method for activating a service tracing function according to Embodiment 1, which includes:
A1. receiving a request for activating a service tracing function, the request is generally sent by an OSPE requester, and the request specifies the service that needs to be traced and the function control requirement related to the service, referred to as "activating the tracing function";
A2. querying the service dependency according to the service specified in the request, namely, obtaining the information of related component of the service, etc;
A3. performing a conflict detection for the related component according to the information of related component and the function control requirement related to the service and judging whether the function control requirement "activating the tracing function" conflict with the current tracing status of each component, The related component are divided into two parts according to the detection result, namely, conflicting component whose tracing function is activated and non-conflicting component whose tracing function is deactivated;
A4. handling the components differentially according to the conflict detection results, including:
   handling the non-conflicting component:
A41. sending a command for activating the tracing function to the components whose tracing function is deactivated;
   handling the conflicting component:
   not sending a command for activating the tracing function to the components whose tracing function is activated;
A5. performing the subsequent processes for the non-conflicting component and the conflicting component differentially;
   for the non-conflicting component:
A51. executing the command of activating the tracing function for the corresponding component to activate the tracing function of the component;
A52. updating the current tracing status of each related component according to the result of executing the command, namely, the executing status of activating the tracing function of the component;
   for the conflicting component:
A53. updating the current tracing status of the related component according to the activating tracing function event.

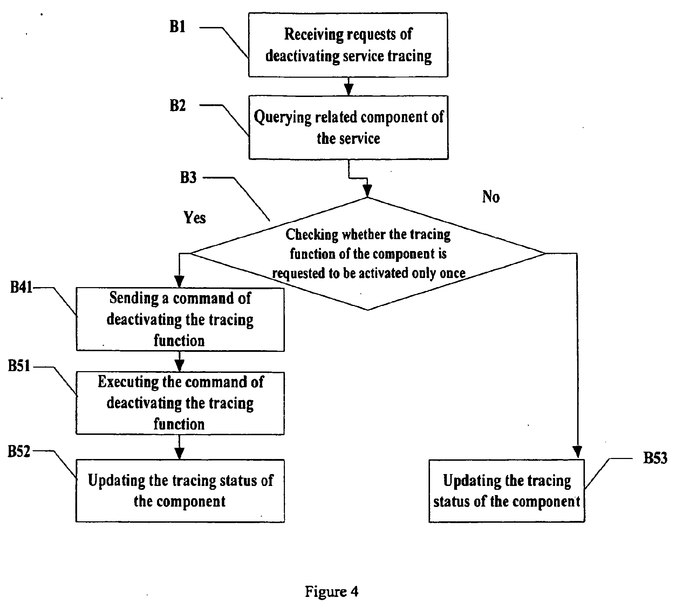

Figure 4 illustrates a method for deactivating a service tracing function according to Embodiment 2, which includes:
B1. receiving a request for deactivating a service tracing function, in which the request is generally sent by an OSPE requester or automatically generated by an OSPE server or sent by other relevant modules; and the request specifies the service that needs to deactivate the tracing and the function control requirement related to the service, referred to as "deactivating the tracing function";
B2. querying the service dependency according to the service specified in the request, namely, obtaining the information of related component of the service, etc;
B3. performing a conflict detection for the related component according to the information of related component and the function control requirement related to the service, and judging whether the function control requirement "deactivating the tracing function" conflict with the current tracing status of each component. The related component are divided into two parts according to the detection result, namely, conflicting component whose tracing function is used by multiple tracing requests and non-conflicting component whose tracing function is used by one tracing request;
B4. handling the components differentially according to the conflict detection result, including:
   Handling the non-conflicting component:
B41. sending a command of deactivating the tracing function to the components whose tracing function is used by one tracing request;
   handling the conflicting component:
   not sending a command for deactivating the tracing function to the components whose tracing function is used by multiple tracing requests;
B5. performing the subsequent processes for the components which are handled differentially after the command of deactivating the tracing function is sent;
   for the components to which a command of deactivating the tracing function is sent:
B51. executing the command of deactivating the tracing function for the corresponding component to deactivate the tracing function of the component;
B52. updating the current tracing status of each related component according to the results of executing the command, namely, the status of deactivating the tracing function of the component;
   for the components to which command of deactivating the tracing function is not sent:
B53. updating the current tracing status of the related component according to the deactivating tracing function request.

As revealed in the foregoing two embodiments, the conflict detection judges whether the function control operation requested on the component is repetitive or contradictory as against the current tracing status of the component. The criteria of judging come in many types and are herein aggregated in a tracing status table. Conflict detection is performed by querying a tracing status table. After a control command is executed, the tracing status table is updated according to the execution results. The data structure of a tracing status table is exemplified below, but is not limited to the following:
records the times of invoking a component whose tracing function is activated, namely, the times of requesting to activate the tracing function of the component. The data structure is as follows:

| | |
|---|---|
| Component | Count of invoking |

In the case of querying a tracing status table, during the conflict detection for activating the tracing function, it indicates that the tracing function of the component is activated, if a component already exists in the component box; during the conflict detection for deactivating the tracing function, it indicates that the tracing function of the component is requested to be activated repeatedly, if the times of invoking the component is equal to or greater than two.
In the case of updating a tracing status table, during update of activating the tracing function, the times of invoking the component increases by one, if a component already exists in the component box of the tracing status table; otherwise, adds the component into the tracing status table and sets the corresponding count of times of invoking the component to "1" (for the component not recorded in the tracing stable table, the count of times of invoking is zero by default); during update of deactivating the tracing function, the count of times of invoking the component decreases by one, and deletes the entry of the component if the count of times of invoking the component changes to zero.

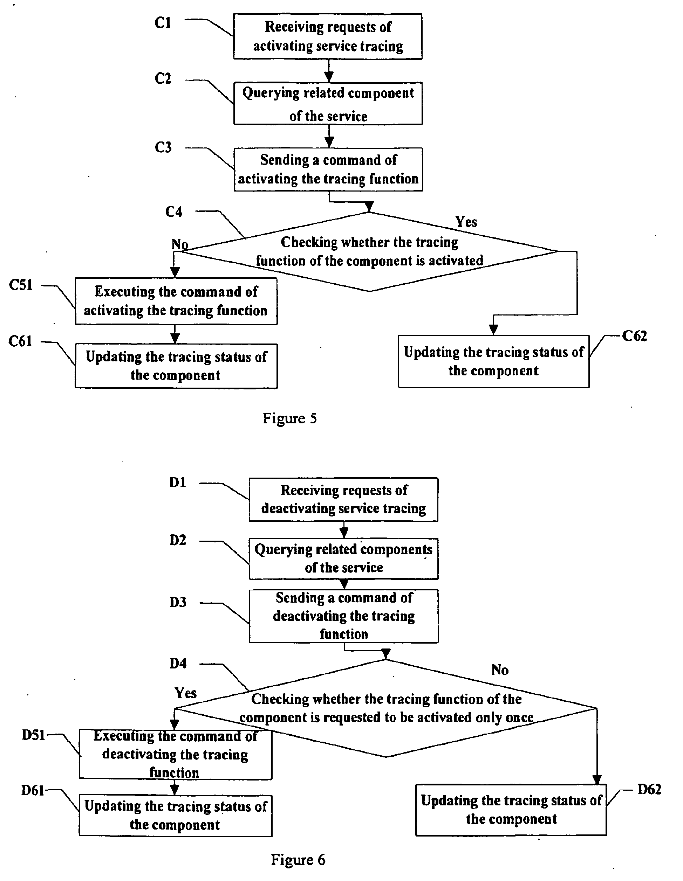

The conflict detection process of the above two embodiments is performed before the control command is sent, so that the necessity of sending the command is identifiable. The conflict detection process may also be performed after the command is sent and before the command is executed. For the same control command, the components in different tracing status may be handled differently.
Embodiment 3 is shown in Figure 5, a method for activating a service tracing function includes:
C 1. receiving a request of activating a service tracing function, the request specifies the service that needs to be traced and the service-related function control requirement "activating the tracing function";
C2. querying the service dependency according to the service specified in the request, namely, obtaining the information of related component of the service;
C3. sending a command of activating the tracing function to each related component, the command carries the service that needs to be traced and the service-related function control requirement "activating the tracing function";
C4. performing conflict detection the component according to the command of activating the tracing function, and judging whether the control request "activating the tracing function" conflict with the current tracing status of the component. If the tracing function is currently activated for the component, conflict exists; otherwise, no conflict exists;
C5. handling the components differentially according to the conflict detection results, including:
   handling the non-conflicting component:
C51. executing the command of activating the tracing function for the component to activate the tracing function of the component;
   handling the conflicting component:
   not executing command of activating the tracing function;
C6. performing the subsequent processes for the components which are handled differentially after the command of activating the tracing function is executed;
   in the case that the command of activating the tracing function is executed:
C61. updating the current tracing status of the related component according to the results of executing the command of activating the tracing function on the component, namely, the status of activating the tracing function on the component;
   in the case that command of activating the tracing function is not executed:
C62. updating the current tracing status of the related component according to the activating tracing function request.
Embodiment 4 is shown in Figure 6, a method for deactivating a service tracing function includes:
D1. receiving a request of deactivating a service tracing function, the request specifies the service that needs no more tracing and the service-related function control requirement "deactivating the tracing function";
D2. querying the service dependency according to the service specified in the request, namely, obtaining the information of related component of the service;
D3. sending a command of deactivating the tracing function to each related component, the command carries the service that needs to be traced and the service-related function control requirement;
D4. performing conflict detection the component according to the command of deactivating the tracing function, and judging whether the control request "deactivating the tracing function" conflict with the current tracing status of the component. If the tracing function of the component is currently used by multiple tracing requests, conflict exists; if the tracing function of the component is currently used by one tracing request, no conflict exists;
D5. handling the components differentially according to the conflict detection results, including:
   handling the non-conflicting component:
D51. executing the command of deactivating the tracing function for the component to deactivate the tracing function of the component;
   handling the conflicting component:
   not executing command of deactivating the tracing function;
D6. performing the subsequent processes for the components which are handled differentially after the command of deactivating the tracing function is executed;
   in the case that the command of deactivating the tracing function is executed:
D61. updating the current tracing status of the related component according to the results of executing the command of deactivating the tracing function on the component, namely, the status of deactivating the tracing function on the component;
   in the case that command of deactivating the tracing function is not executed:
D62. updating the current tracing status of the related component according to the activating tracing function request.

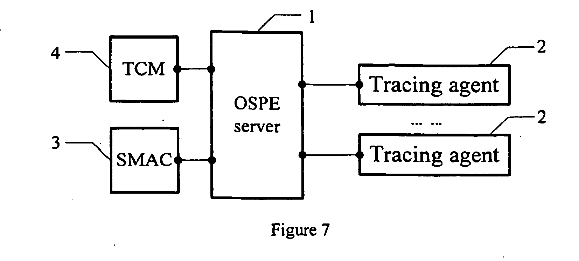

The conflict detection operation according to the service tracing control method in an embodiment of the present invention may be performed by adding a Tracing Conflict Management (TCM) in an OSPE system; the TCM may be independent of the modules such as OSPE server, SMAC and tracing agent and exist in the OSPE system independently, or may be added as a sub-module into the foregoing tracing device. Based on the use of the TCM, multiple new devices and system architectures can be obtained, as detailed below.
Embodiment 5 is shown in Figure 7, an OSPE system includes: an OSPE server 1, tracing agent 2 (there are more than one tracing agent set in different traced components), an SMAC 3, and a TCM 4.
The OSPE server 1 receives service tracing control requests, the service tracing control requests includes a request of activating the service tracing function, or a request of deactivating the service tracing function etc.. A service tracing control request carries a requested service and the service-related function control requirement. Moreover, the OSPE server queries the SMAC 3 about the related component of the requested service according to the requested service; sends a conflict detection request to the TCM 4, the request carries information of related component provided by the SMC 3 and the relevant tracing control request; sends a service tracing control command to the tracing agent 2 of each related component according to the non-conflicting part of the conflict detection results of each component fed back by the TCM 4, the service tracing control commands include the command of activating/deactivating the tracing function of the component; and feeds back the results of executing the service tracing control command to the TCM 4.
The SMAC 3 is adapted to store service data, component data, and the dependency relations between them; activate the OSPE server 1 to query the information of rel ated component of the service; and feed back the query results to the OSPE server 1 through a list of related component.
The TCM 4 receives a conflict detection request sent by the OSPE server 1, the conflict detection request carries information of related component and the function control requirement in the service tracing control request. The TCM 4 judges whether the service-related tracing control request conflict with the current tracing status of each related component, and feeds back a result of detecting related component to the OSPE server 1, the result carries the non-conflicting component. The TCM 4 divides the list of related component sent by the OSPE server 1 into two new lists - a list of conflicting component and a list of non-conflicting component after conflict detection. The two lists come in two types: for a tracing control request of the activating type, the two lists refer to a list of components whose tracing function is activated, and a list of components whose tracing function is deactivated; for a tracing control request of the deactivating type, the two lists refer to a list of components whose tracing function is used by multiple tracing requests, and a list of components whose tracing function is used by one tracing request. The TCM 4 may feed back the detection result which carries the non-conflicting component to the OSPE server 1 through a list. Moreover, the TCM 4 updates the current tracing status of the component. For conflicting component, the TCM 4 performs update according to the function control requirement in the service tracing control request. For non-conflicting component, the TCM 4 updates the current tracing status of the corresponding component according to the result of executing the service tracing control command fed back by the OSPE server 1.
The tracing agent 2 performs service tracing control for the corresponding component according to the service tracing control command sent by the OSPE server 1; and feeds back the result of executing the service tracing control command.

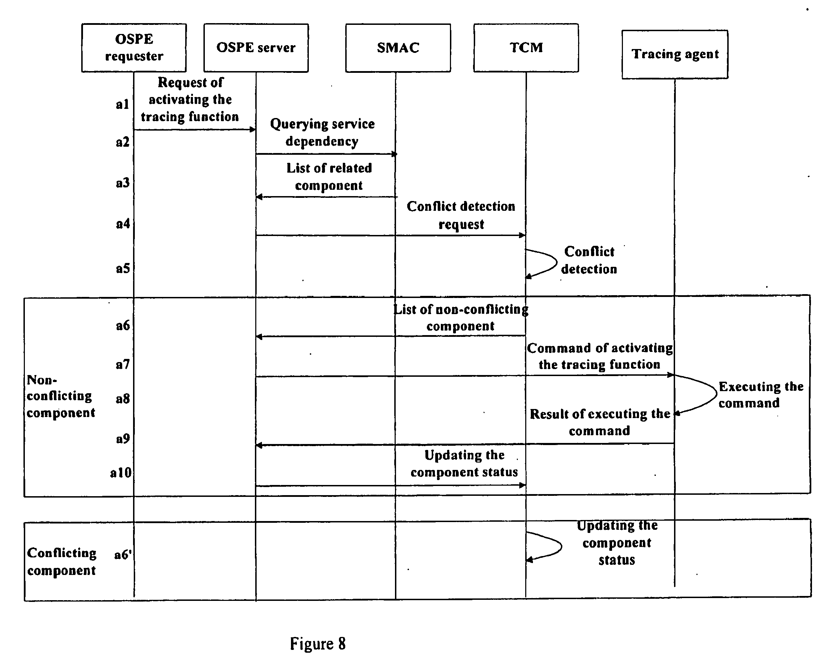

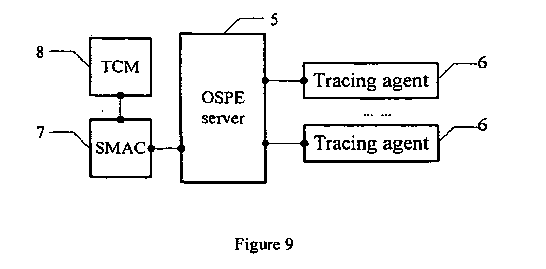

The foregoing OSPE system may save the tracing status table in the TCM 4 by using the service tracing control method provided by the first or second embodiment of the present invention. The method for activating the service tracing function in an OSPE system is elaborated below as an example, and the method for deactivating the service tracing function in an OSPE system is similar. As shown in Figure 8, the signaling flow for activating the service tracing function in an OSPE system includes:
a1. The OSPE server receives a request of activating the service tracing function from an OSPE requester, the request specifies the service that needs to be traced.
a2. The OSPE server queries the SMAC about the service dependency according to the service specified in the request.
a3. According to the specified service, the SMAC queries the service dependency , obtains the services related to tracing of the specified service and the related component required for tracing the service, and returns a list of the components to the OSPE server.
a4. The OSPE server sends a conflict detection request to the TCM, the request carries a list of the components involved in the service tracing request and the relevant control request.
a5. According to the component list and the relevant control request, the TCM queries the tracing status table, and divides the components into a list of conflicting component whose tracing function is activated and a list of non-conflicting component whose tracing function is deactivated.
a6'. The TCM updates the status of the components whose tracing function is activated, and records the activating service tracing function request.
a6. The TCM returns a conflict detection result to the OSPE server, the result carries a list of non-conflicting component whose tracing function is deactivated.
a7. The OSPE server sends a command of activating the tracing function to the tracing agent of each component in the list of components whose tracing function is deactivated.
a8. The tracing agent executes the tracing command to activate the tracing function of the component.
a9. The tracing agent returns a result of executing the tracing command on the component to the OSPE server.
a10. If the returned result is success of executing the tracing command, the OSPE server feeds back the result to the TCM, and the TCM updates the status of executing the tracing command on the component in the tracing status table.
Step a6' is a process of executing the command for conflicting component. Steps a6∼a10 refer to a process of executing the command for non-conflicting component. The two processes can be performed concurrently.
Embodiment 6 is shown in Figure 9, an OSPE system includes: an OSPE server 5, a tracing agent 6, an SMAC 7, and a TCM 8.
The OSPE server 5 receives service tracing control requests. A service tracing control request carries the requested service and the service-related function control requirement. According to the requested service, the OSPE server queries the SMAC 7 about the related component of the requested service. According to the information of non-conflicting related component fed back by the SMAC 7, the OSPE server sends a service tracing control command to the tracing agent 6 of each related component, and feeds back the result of executing the service tracing control command to the SMAC 7.
After receiving the query request from the OSPE server 5, the SMAC 7 queries the information of related component, and sends a conflict detection request to the TCM 8, the request carrying the information of related component and the function control requirement related to the service. The SMAC 7 feeds back the information of non-conflicting related component returned by the TCM 8 to the OSPE server 5, and forwards the result of executing the service tracing control command returned by the OSPE server 5 to the TCM 8.
The TCM 8 receives the conflict detection request sent by the SMAC 7; judges whether the tracing function control request conflict with the current tracing status of each related component; divides the conflict detection results of the components into conflicting component and non-conflicting component; feeds back the detection results that carry the information of the non-conflicting related component to the SMAC 7; and updates the current tracing status of the components. For conflicting component, the TCM 8 may update the current tracing status according to the function control requirement related to the service directly. For non-conflicting component, the TCM 8 may update the current tracing status of the corresponding component according to the result of executing the service tracing control command fed back by the SMAC 7.
The tracing agent 6 performs service tracing control for the corresponding component according to the service tracing control command sent by the OSPE server 5, and feeds back the result of executing the service tracing control command. This embodiment and the fifth embodiment adopt an independent TCM, and vary in that:In the fifth embodiment, the TCM interacts with the OSPE server only ,In this embodiment, the TCM interacts with the SMAC only, receives the list of related component of the SMAC, and generates a conflict detection result and returns it to the SMAC. The feedback from the tracing agent after executing the control command may be transferred to the TCM through the SMAC indirectly.

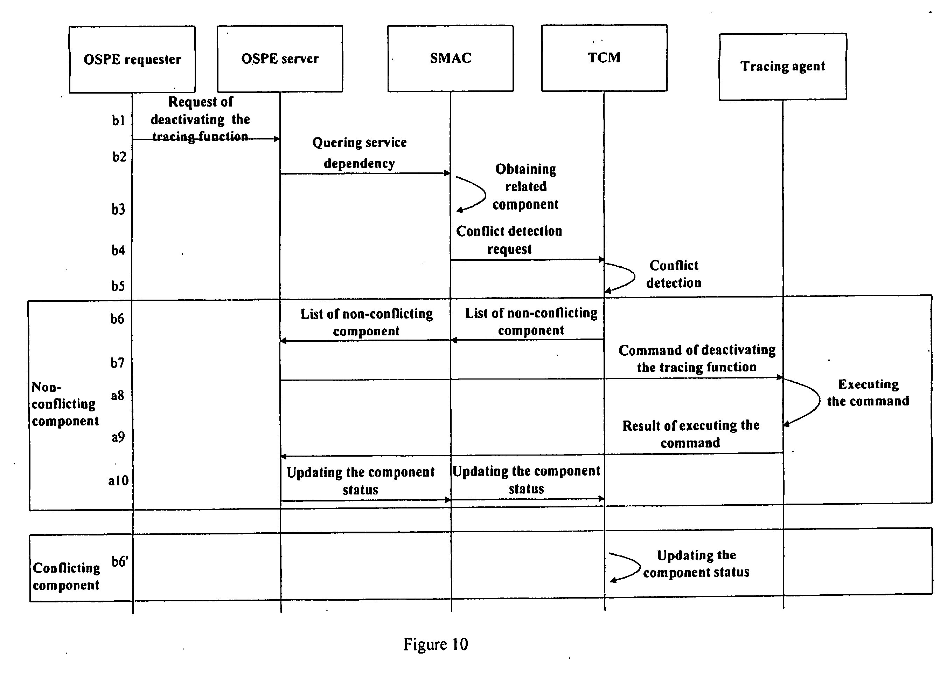

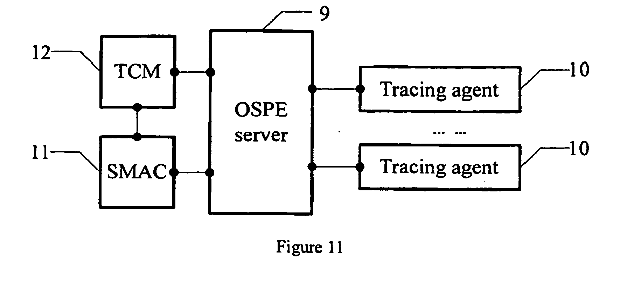

The OSPE system in this embodiment may also adopt the service tracing control method provided by the first or second embodiment of the present invention. The method for deactivating the service tracing function in an OSPE system is elaborated below as an example, and the method for activating the service tracing function in an OSPE system is similar. As shown in Figure 10, the signaling flow for deactivating the service tracing function in an OSPE system includes:
b1. The OSPE server receives a request of deactivating the service tracing function from an OSPE requester, the request specifies the service that needs no more tracing.
b2. The OSPE server queries the SMAC about the service dependency according to the service specified in the request.
b3. According to the specified service, the SMAC queries the service dependency, and obtains the services related to tracing of the specified service and the related component required for tracing the service.
b4. The SMAC sends a conflict detection request to the TCM, the request carrying a list of the components involved in the service tracing request and the function control requirement related to the service.
b5. According to the component list and the relevant control request, the TCM queries the tracing status table, and divides the components into two groups: a list of non-conflicting component whose tracing function is used by one tracing request, and a list of conflicting component whose tracing function is used by multiple tracing requests.
b6'. The TCM updates the status of the components whose tracing function is used by multiple tracing requests, and records the deactivating service tracing function request.
b6. The TCM returns a conflict detection result to the SMAC, the result carrying a list of non-conflicting component whose tracing function is used by one tracing request. The SMAC transfers the result to the OSPE server.
b7. The OSPE server sends a command of deactivating the tracing function to the tracing agent of each component in the list of components whose tracing function is used by one tracing request.
b8. The tracing agent executes the tracing command to deactivate the tracing function of the component.
b9. The tracing agent returns a result of executing the tracing command on the component to the OSPE server.
b10. If the returned result is success of executing the tracing command, the OSPE server feeds back the result to the TCM, and the TCM updates the status of executing the tracing command on the component in the tracing status table.
Step b6' is a process of executing the command for conflicting component. Steps b6∼b10 refer to a process of executing the command for non-conflicting component. The two processes may be performed concurrently.
Embodiment 7 is shown in Figure 11, an OSPE system includes: an OSPE server 9, a tracing agent 10, an SMAC 11, and a TCM 12.
The OSPE server 9 receives service tracing control requests, and queries the SMAC 11 about the related component of the requested service. According to the conflict detection result of each component fed back by the TCM 12, the OSPE server sends the corresponding service tracing control command to the tracing agent 10 of the related component, and feeds back the result of executing the service tracing control command to the TCM 12.
After receiving the query request of the OSPE server 9, the SMAC 11 queries the information of related component, and sends a conflict detection request to the TCM 12, the conflict detection request carries the information of related component and the relevant control request.
The TCM 12 receives the conflict detection request sent by the SMAC 11; judges whether the tracing function control request conflict with the current tracing status of each related component; divides the conflict detection results of the components into conflicting component and non-conflicting component; feeds back the detection results that carry the information of the non-conflicting related component to the OSPE server 9; and updates the current tracing status of the corresponding components according to the results of executing the service tracing control command. Regarding update of the current tracing status of the components, for conflicting component, the TCM 12 may update the current tracing status according to the function control requirement related to the service directly; for non-conflicting component, the TCM 12 may update the current tracing status of the corresponding component according to the result of executing the service tracing control command fed back by the OSPE server 9.
The tracing agent 10 performs service tracing control for the corresponding component according to the service tracing control command sent by the OSPE server 9; and feeds back the result of executing the service tracing control command.

Compared with the preceding two embodiments, this embodiment also adopts an independent TCM, but varies in that:
In this embodiment, the TCM interacts with both OSPE server and SMAC, receives the list of related component of the SMAC, generates a conflict detection result, and returns the detection result carrying the information of non-conflicting related component to the OSPE server directly. The feedback from the tracing agent is returned by the OSPE server to the TCM directly.

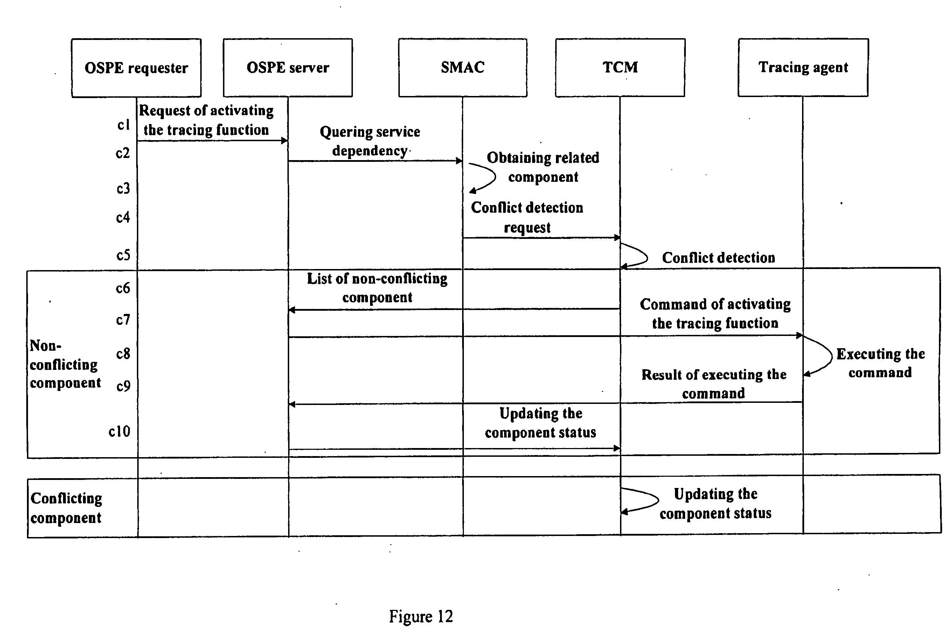

As shown in Figure 12, a schematic signaling flow for activating the service tracing function in an OSPE system according to this embodiment includes:
c1. The OSPE server receives a request of activating the service tracing function from the OSPE requester.
c2. The OSPE server queries the SMAC about the service dependency according to the service specified in the request.
c3. According to the specified service, the SMAC queries the service dependency , and obtains the services related to tracing of the specified service and the related component required for tracing the service.
c4. The SMAC sends a conflict detection request to the TCM.
c5. According to the component list and the relevant control request, the TCM queries the tracing status table, and divides the components into two groups: a list of conflicting component whose tracing function is activated, and a list of non-conflicting component whose tracing function is deactivated.
c6'. The TCM updates the status of the components whose tracing function is activated, and records the activating service tracing function request.
c6. The TCM returns a conflict detection result to the OSPE server, the conflict detection result carries a list of non-conflicting component whose tracing function is deactivated.
c7. The OSPE server sends a command of activating the tracing function to the tracing agent of each component in the list of components whose tracing function is deactivated.
c8. The tracing agent executes the tracing command to activate the tracing function of the component.
c9. The tracing agent returns a result of executing the tracing command on the component to the OSPE server.
c10. If the returned result is success of executing the tracing command, the OSPE server feeds back the result to the TCM, and the TCM updates the status of executing the tracing command on the component in the tracing status table.
Step c6' is a process of executing the command for conflicting component. Steps c6∼c10 refer to a process of executing the command for non-conflicting component. The two processes may be performed concurrently.

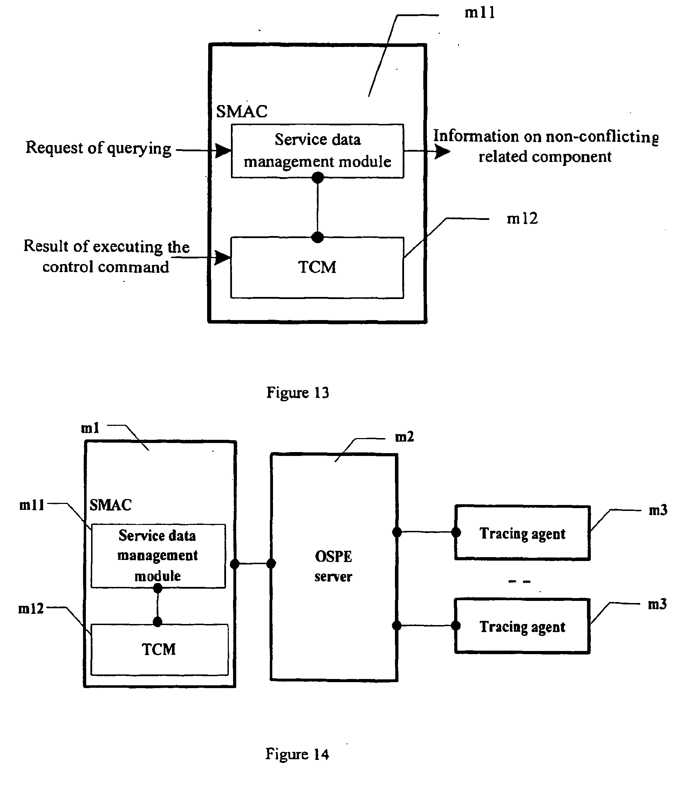

Embodiments 5∼7 provide schematic structural system solutions for handling the tracing conflict detection independently in a centralized way. In these solutions, the conflict detection function is logically independent of other modules, which is conducive to standardization of the conflict detection function module and unified management of the component status data.
Embodiment 8 is shown in Figure 13, an SMAC includes: a service data management module m11, and a TCM module m 12.
The service data management module m11 performs the operations that are generally executed by the SMAC, the operations include:
stores service data and information of related component; receives request of querying related component of the service, the query request carrying the requested service and the service-related function control requirement; and sends the found information of related component and function control requirement related to the service to the TCM module m 12 newly added in the present invention; and
sends a conflict detection result carrying information of non-conflicting related component in response to the query request, according to the conflict detection results of the components fed back by the TCM module m12.
The TCM module m12 is responsible for executing the conflict detection operations, including: checking whether the tracing function control request conflict with the current tracing status of each related component; feeding back the detection results that carry the information of the non-conflicting related component to the service data management module m11; receiving the results of executing the control command fed back by the component; and updating the current tracing status of the components, for conflicting component, the TCM may update the current tracing status according to the function control requirement related to the service directly; for non-conflicting component, the TCM may update the current tracing status of the corresponding component according to the returned result of executing the control command.

Figure 14 shows a schematic structure of an OSPE system that adopts the foregoing SMAC. The SMAC m1 receives query request sent from the OSPE server m2; The SMAC m1 performs tracing conflict detection internal directly after obtaining the related component of the queried service; returns detection results carrying information of non-conflicting related component to the OSPE server m2. The OSPE server m2 sends the corresponding control command to the tracing agent m3 according to the information of non-conflicting component. The tracing agent executes the command and the execution result may be fed back by the OSPE server m2 to the TCM module m12 in the SMAC m1 through the OSPE server m2 directly.

In this system structure, the conflict detection function is located on the SMAC; and the query function of related component of tracing and the conflict detection function are centralized on the SMAC, thus shortening the handling process.

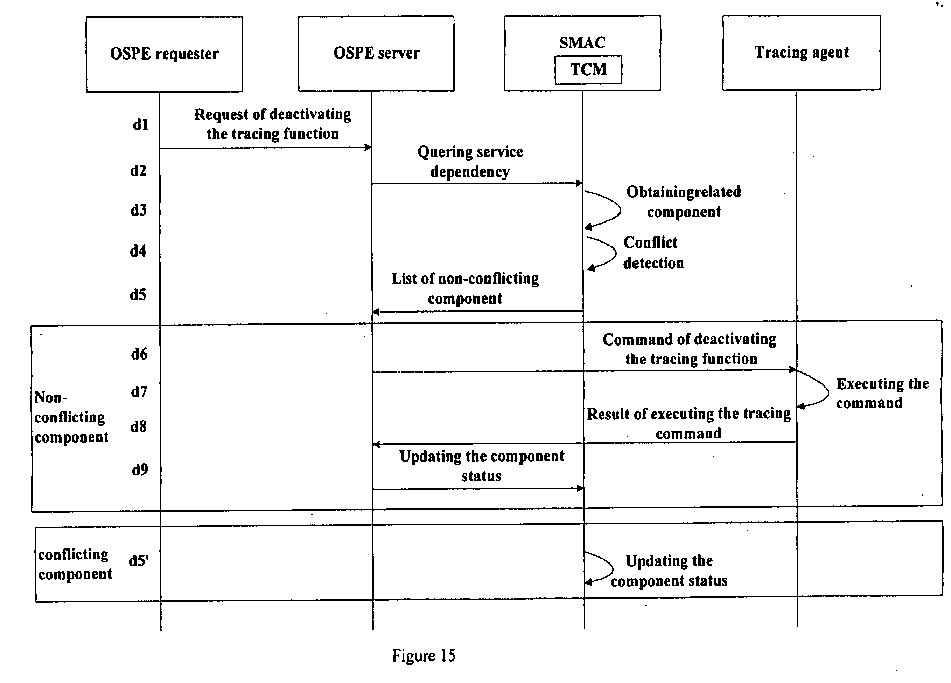

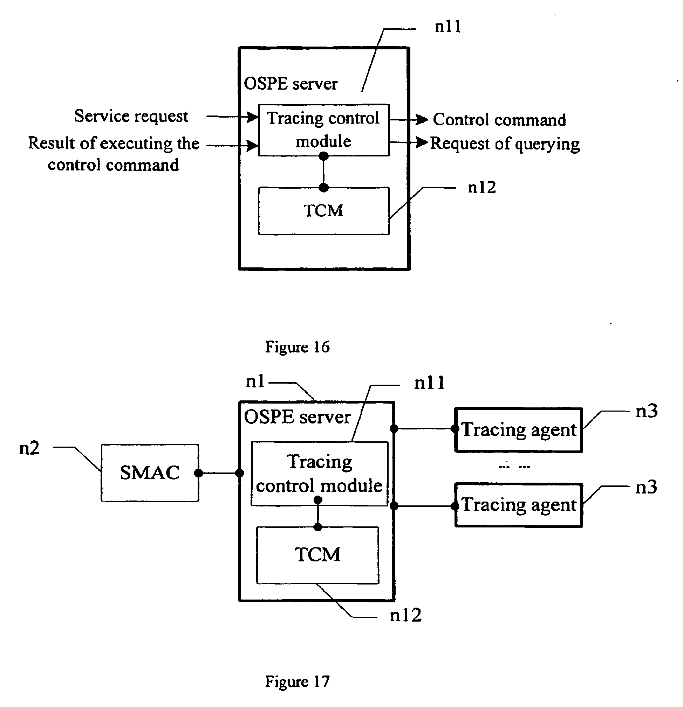

As shown in Figure 15, the schematic signaling flow for deactivating the service tracing function in an OSPE system according to the second embodiment includes:
d1. The OSPE server receives a request of deactivating the service tracing function from an OSPE requester, the request specifies the service that needs no more tracing.
d2. The OSPE server queries the SMAC about the service dependency according to the service specified in the request.
d3. According to the specified service, the SMAC queries the service dependency , and obtains the services related to tracing of the specified service and the related component required for tracing the service.
d4. According to the component list and the relevant control request, the TCM module of the SMAC queries the tracing status table, and divides the components into two groups: a list of non-conflicting component whose tracing function is used by one tracing request, and a list of conflicting component whose tracing function is used by multiple tracing requests.
d5'. The TCM module updates the status of the components whose tracing function is used by multiple tracing requests, and records the deactivating service tracing function request.
d5. The SMAC returns a conflict detection result to the OSPE server, the conflict detection result carries a list of non-conflicting component whose tracing function is used by one tracing request.
d6. The OSPE server sends a command of deactivating the tracing function to the tracing agent of each component in the list of components whose tracing function is used by one tracing request according to the list of non-conflicting component.
d7. The tracing agent executes the tracing command to deactivate the tracing function of the component.
d8. The tracing agent returns a result of executing the tracing command on the component to the OSPE server.
d9. If the returned result is success of executing the tracing command, the OSPE server feeds back the result to the TCM module of the SMAC, and the TCM module updates the status of executing the tracing command on the component in the tracing status table.
Step d5' is a process of executing the command for conflicting component. Steps d5∼d9 refer to a process of executing the command for non-conflicting component. The two processes may be performed concurrently.
Embodiment 9 is shown in Figure 16, an OSPE server includes: a tracing control module n11, and a TCM module n12. The tracing control module n11 performs the operations that are generally executed by the OSPE server, including:
receiving service tracing control requests, the service tracing control request carrying the requested service and the service-related function control requirements;
querying and obtaining information of related component of the specified service;
sending the found information of related component and the function control requirement related to the service to a TCM module n12 newly added in the present invention;
sending a proper service tracing control command according to the result of conflict detection on each component fed back by the TCM module n12; and
feeding back the result of executing the service tracing control command to the TCM module n12.
The TCM module n12 is responsible for executing the conflict detection operations, including:
checking whether the tracing function control request conflict with the current tracing status of each related component;
feeding back the detection results that carry the information of non-conflicting related component to the tracing control module n11; and
updating the current tracing status of the components: for conflicting component, the TCM may update the current tracing status according to the function control requirement related to the service directly; for non-conflicting component, the TCM may update the current tracing status of the corresponding component according to the returned result of executing the service tracing control command.

Figure 17 shows an architecture of an OSPE system that adopts an OSPE server. The OSPE server n1 obtains a list of related component of the service by querying the SMAC n2. The TCM module n12 performs tracing conflict detection internally, and sends the corresponding control command to the tracing agent n3 according to the detection results. The TCM module n12 of the OSPE server may handle the command execution feedback of the tracing agent n3.

In this system architecture, the conflict detection function is located on the OSPE server; and the sending of the tracing command, the conflict detection function and the feedback of the tracing agent are centralized on the OSPE server, thus shortening the handling process.

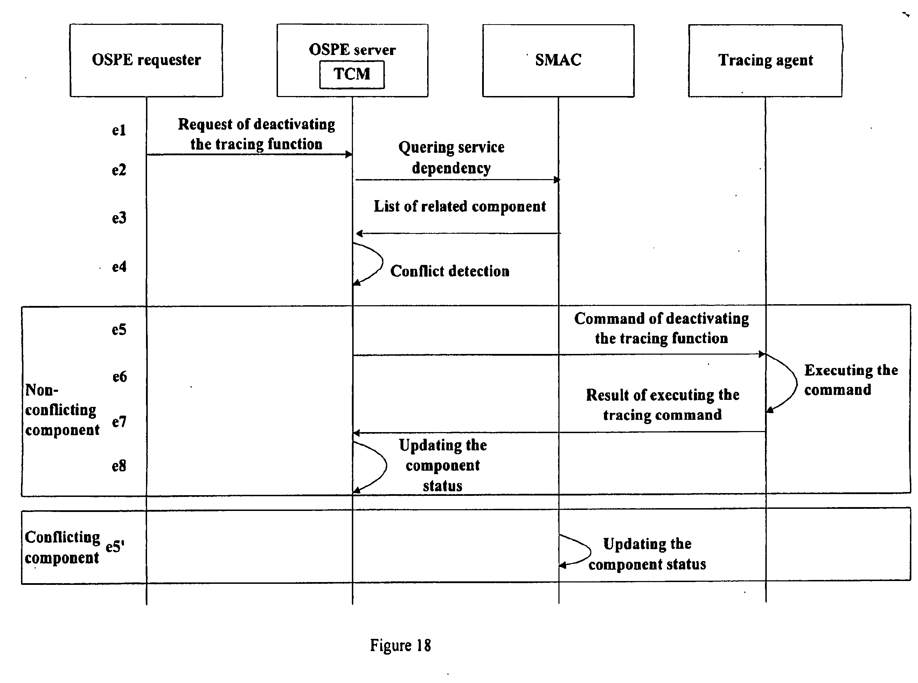

As shown in Figure 18, a schematic signaling flow for deactivating the service tracing function in an OSPE system according to the second embodiment includes:
e1. The OSPE server receives a request of deactivating the service tracing function of the OSPE requester, the request specifies the service that needs no more tracing and the service-related function control requirement "deactivating the tracing function".
e2. The OSPE server queries the SMAC about the service dependency according to the service specified in the request.
e3. According to the specified service, the SMAC queries the service dependency , and obtains the services related to tracing of the specified service and the related component required for tracing the service, and returns a list of the components to the OSPE server.
e4. According to the component list and the relevant control request, the TCM module of the OSPE server queries the tracing status table, and divides the components into two groups: a list of non-conflicting component whose tracing function is used by one tracing request, and a list of conflicting component whose tracing function is used by multiple tracing requests.
e5'. The TCM module updates the status of the components whose tracing function is used by multiple tracing requests, and records the deactivating service tracing function request.
e5. The OSPE server sends a command of deactivating the tracing function to the tracing agent of each component in the list of components whose tracing function is used by one tracing request according to the list of non-conflicting component generated by the TCM module.
e6. The tracing agent executes the tracing command to deactivate the tracing function of the component.
e7. The tracing agent returns a result of executing the tracing command on the component to the OSPE server.
e8. If the returned result is success of executing the tracing command, the OSPE server feeds back the result to the TCM module, and the TCM module updates the status of executing the tracing command on the component in the tracing status table.
Step e5' is a process of executing the command for conflicting component. Steps e5∼e8 refer to a process of executing the command for non-conflicting component. The two processes can be performed concurrently.

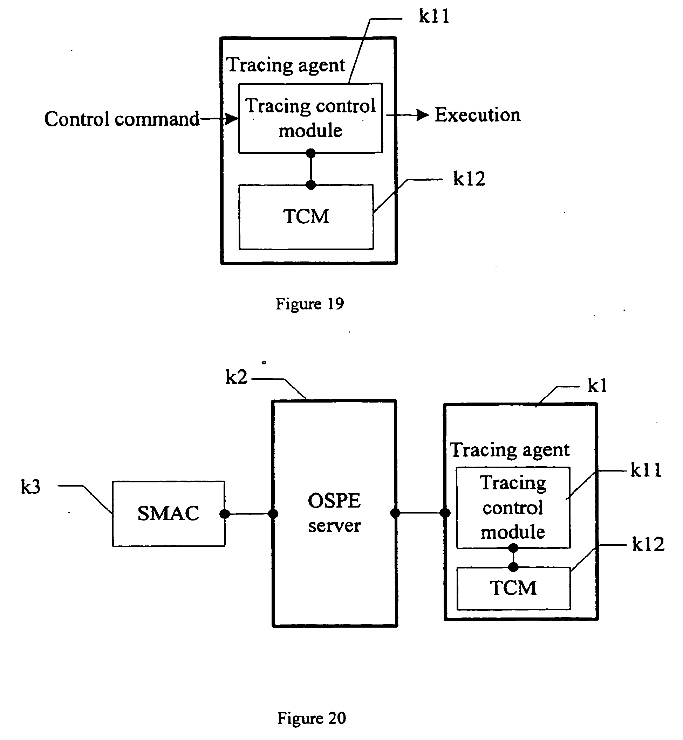

In the solutions provided in embodiments 5∼9, the tracing conflict detection module is set at the centralized control side of the OSPE system in a centralized mode. Nevertheless, the tracing conflict detection module may also be located in the tracing agents in a distributed way, and perform conflict detection before the tracing agent executes the control command, as exemplified hereinafter.
Embodiment 10 is shown in Figure 19, a tracing agent includes: a tracing processing module k11, and a TCM module k12.
The tracing processing module k11 is responsible for the operations that are generally performed by a tracing agent, including:
receiving service tracing control commands;
sending the tracing function control request to the TCM module k12 newly added in the present invention; and
handling the tracing commands according to the detection results fed back by the TCM module k 12.
The TCM module k12 is responsible for conflict detection, including:
detecting whether the tracing function control request conflict with the current tracing status of the component; and
dividing the detection results into conflicting component and non-conflicting component: for non-conflicting detection results, feeding back the detection results carrying non-conflicting component to the tracing control module k 11; for conflicting detection results, updating the tracing status directly.

Figure 20 shows the architecture of the OSPE system that adopts the foregoing tracing agent (for clearer illustration, one tracing agent is drawn in the figure). The OSPE server k2 obtains a list of related component of the service by querying the SMAC k3, and sends a control command to the tracing agent k1 according to the list of related component. The TCM module k12 of the tracing agent k1 handles the control command differentially after performing conflict detection.

In this system architecture, the conflict detection function is located on the tracing agent, and the component status are stored and processed in a distributed way, thus minimizing the impact on the existing process, shortening the processing flow to the utmost, and improving the processing efficiency. Compared with the centralized mode, the distributed mode requires the system to maintain the tracing status table of the local component.

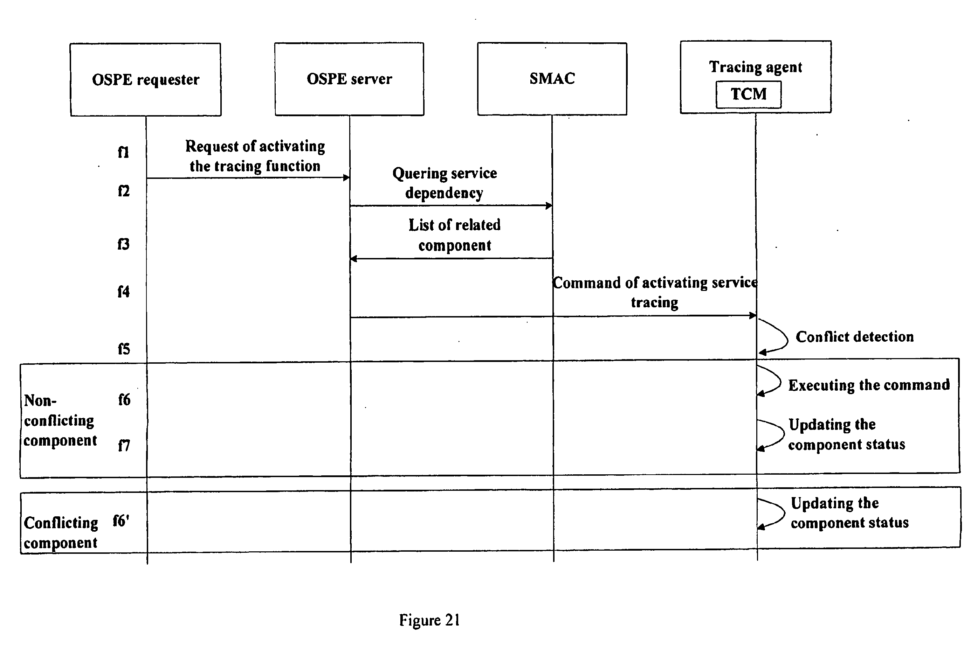

As shown in Figure 21, the signaling flow for activating the service tracing function in an OSPE system according to the first embodiment includes:
f1. The OSPE server receives a request of activating the service tracing function from the OSPE requester.
f2. The OSPE server queries the SMAC about the service dependency according to the service specified in the request.
f3. According to the specified service, the SMAC queries the service dependency , and obtains the services related to tracing of the specified service and the relevant components required for tracing the service, and returns a list of the components to the OSPE server.
f4. The OSPE server sends a command of activating the service tracing function to tracing agent of each component.
f5. The TCM module of the tracing agent performs conflict detection, and queries the tracing status table according to the command of activating the service tracing function. If the tracing function of the component is activated, it indicates that conflict exists for activating the tracing function; if the tracing function of the component is deactivated, it indicates that no conflict exists for activating the tracing function.
f6'. The TCM module updates the status of the components in the case that the detection result indicates conflict, and records the activating the service tracing function request.
f6. The TCM module executes the command of activating the service tracing function in the case that the detection result indicates no conflict, and activates the tracing function of the component.
f7. If the command of activating the service tracing function is executed successfully, the TCM module updates the tracing status table of the corresponding components according to the execution results.

In order to expound the present invention clearer, the application of an OSPE system based on the fifth embodiment of the present invention is elaborated below, and the application of other solutions may be inferred by analogy.

Dependency relation between a service and components: as shown in Figure 2, the tracing of service A requires components 1, 3 and 4; the tracing of service B requires components 2, 3 and 5.

The contents about service dependency relations stored in the SMAC may be denoted as follows:

| Service name | Related component |
|---|---|
| Service A | Component 1, component 3, component 4 |
| Service B | Component 2, component 3, component 5 |

Suppose that the tracing status table in the TCM is empty initially:
In this application instance, the sequence of the operations is: tracing service A first, then tracing service B, and deactivating tracing of service B. The detailed process is as follows:
I. Activating the tracing function of the components related to service A
g1. The OSPE requester requests to activate tracing of service A.
g2. The OSPE server requests the dependency relation of service A from the SMAC.
g3. The SMAC queries the dependency relation of the service according to the service name "service A", and obtains the component list "component 1, component 3, component 4". The SMAC returns the component list "component 1, component 3, component 4" to the OSPE server.
g4. The OSPE server requests the TCM to detect conflict. The request carries a list of related component of service A - "component 1, component 3, component 4", and the function control requirement related to the service "activating the tracing function".
g5. The TCM queries the tracing status table according to the component list. Because the "component 1, component 3, component 4" list does not exist in the current tracing status table, the component list with deactivated tracing function is "component 1, component 3, component 4", and the component list with activated tracing function is empty.
g6. The TCM returns the list of components with deactivated tracing function - "component 1, component 3, component 4" to the OSPE server.
g7. The OSPE server sends a command of activating the service tracing function to tracing agents of component 1, component 3 and component 4 respectively.
g8. The tracing agents of component 1, component 3 and component 4 activate the tracing function of component 1, component 3 and component 4 respectively.
g9. The tracing agents of component 1, component 3 and component 4 return the results of executing the tracing command on such components to the OSPE server.
g10. If component 1, component 3 and component 4 return the results of successful execution of the tracing command, the OSPE server feeds back the results to the TCM, and the TCM updates the status of executing the tracing command on the components in the tracing status table. More particularly, the tracing status table is updated in the following way:
The data structure of the tracing status table is composed of "component" and "count of invoking". In step g10, "component 1 ", "component 3" and "component 4" do not exist in the component box of the tracing status table, so the system adds entries of "component 1", "component 3" and "component 4" into the tracing status table. The default count of invoking of such components is zero, and the count of invoking increases by one (namely, is set to "1 "). In this case, the contents of the tracing status table include:

| Component | Count of invoking |
|---|---|
| Component 1 | 1 |
| Component 3 | 1 |
| Component 4 | 1 |

II. Activating the tracing function of the components related to service B
h1. The OSPE requester requests to activate tracing of service B.
h2. The OSPE server requests the dependency relation of service B from the SMAC.
h3. The SMAC queries the dependency relation of the service according to the service name "service B", and obtains the component list "component 2, component 3, component 5". The SMAC returns the component list "component 2, component 3, component 5" to the OSPE server.
h4. The OSPE server requests the TCM to detect conflict. The request carries a list of related component of service B - "component 2, component 3, component 5", and the function control requirement related to the service "activating the tracing function".
h5. The TCM queries the tracing status table according to the component list. Because component 3 already exists in the tracing status table, it indicates that the tracing function of component 3 has been activated. Therefore, the component list with the deactivated tracing function is "component 2, component 5", and the component list with the activated tracing function is "component 3".
h6. The TCM returns the list of components with deactivated tracing function - "component 2, component 5" to the OSPE server; and updates the status table according to the list of components with activated tracing function - "component 3".
h7. The OSPE server sends a command of activating the tracing function to tracing agents of component 2 and component 5 respectively.
h8. The tracing agents of component 2 and component 5 activate the tracing function of component 2 and component 5 respectively.
h9. The tracing agents of component 2 and component 3 return the results of executing the tracing command on such components to the OSPE server.
h10. If both component 2 and component 3 return a result of successful execution of the tracing command, the OSPE server feeds back the result to the TCM, and the TCM updates the status of executing the tracing command on such components in the tracing status table.
The tracing status table is updated in the following way:
The data structure of the tracing status table is composed of "components" and "count of invoking". In step h6, component 3 already exists in the component box of the tracing status table, so the count of invoking "component 3" increases by 1, namely, changes to "2". In step h10, neither component 2 nor component 5 exists in the component box of the tracing status table, the system adds entries of "component 2" and "component 5" in the tracing status table, and the count of invoking both component 2 and component 5 is "1". In this case, the contents of the tracing status table include:

| Component | Count of invoking |
|---|---|
| Component 1 | 1 |
| Component 2 | 1 |
| Component 3 | 2 |
| Component 4 | 1 |
| Component 5 | 1 |

III. Deactivating the tracing function of the components related to service B
i1. The OSPE requester requests to deactivate tracing of service B.
i2. The OSPE server requests the dependency relation of service B from the SMAC.
i3. The SMAC queries the dependency relation of the service according to the service name "service B", and obtains the component list "component 2, component 3, component 5". The SMAC returns the component list "component 2, component 3, component 5" to the OSPE server.
i4. The OSPE server requests the TCM to detect conflict; the request carries a list of related component of service B - "component 2, component 3, component 5", and the function control requirement related to the service "deactivating the tracing function".
i5. The TCM queries the tracing status table according to the component list. Because the count of invoking component 3 is "2", conflict of deactivating exists, and component 3 belongs to the list of components whose tracing function is activated by multiple tracing requests. The count of invoking component 2 and component 5 is "1 ", no conflict of deactivating exists, and component 2 and component 5 belong to the list of components whose tracing function is activated by one tracing request.
i6. The TCM returns the list of components whose tracing function is used by one tracing request - "component 2, component 5" to the OSPE server; and updates the status table according to the list of components whose tracing function is used by multiple tracing requests - "component 3".
i7. The OSPE server sends a command of deactivating the tracing function to tracing agents of component 2 and component 5 respectively.
i8. The tracing agents of "component 2" and "component 5" deactivate the tracing function of component 2 and component 5.
i9. The tracing agents of component 2 and component 5 return the results of executing the tracing command on such components to the OSPE server.
i10. If both component 2 and component 5 return a result of successful execution of the tracing command, the OSPE server feeds back the result to the TCM, and the TCM updates the status of executing the tracing command on such components in the tracing status table.
The tracing status table is updated in the following way:
The data structure of the tracing status table is composed of "component" and "count of invoking", and the count of invoking the "component 2, component 3, component 5" involved in tracing of "service B" in the tracing status table decreases by one. Therefore, the count of invoking "component 2" is zero, the count of invoking "component 3" is one, and the count of invoking "component 5" is zero. The system deletes "component 2" and "component 5" from the tracing status table. In this case, the contents of the tracing status table include:

| Component | Count of invoking |
|---|---|
| Component 1 | 1 |
| Component 3 | 1 |
| Component 4 | 1 |

Ordinary technical personnel in this field may understand that all or part of the modules or steps in the preceding embodiments can be completed through a program which instructs related hardware. The program may be stored in a readable storage medium, for example, ROM/RAM, disk and CD in a computer. The programs may be set into different integrated circuit modules, or several modules or steps of the programs may be set into a single integrated circuit module. Therefore, the present invention is not limited to any specific combination of hardware and software.

A service tracing control method, a service tracing system, a service database, and tracing apparatuses such as a tracing control server and a tracing agent provided in an embodiment of the present invention are elaborated above. Although the invention has been described through some exemplary embodiments which help understand the method and essence of the present invention, the invention is not limited to such embodiments.

## Claims

1. A service tracing control method, comprising:
receiving (A1, B1) a service tracing control request which specifies a function control requirement related to the service;
querying (A2, B2) a dependency of a requested service to obtain information of related component of the requested service;
**characterized by**:
when the service tracing control request specifies the function control requirement related to the service "activating the tracing function",
performing (A3) a conflict detection for the related component according to the information of related component and the function control requirement related to the service and judging whether the function control requirement "activating the tracing function" conflicts with the current tracing status of the related component, wherein the related components are divided into conflicting component whose tracing function is activated and non-conflicting component whose tracing function is deactivated according to the detection result;
not sending a command of activating the tracing function to the related component whose tracing function is already activated; and sending (A41) a command of activating the tracing function to the related component whose tracing function is deactivated, executing (A51) the command of activating the tracing function for the corresponding component to activate the tracing function of the component;
when the service tracing control request specifies the function control requirement related to the service "deactivating the tracing function",
performing (B3) a conflict detection for the related component according to the information of related component and the function control requirement related to the service, and judging whether the function control requirement "deactivating the tracing function" conflicts with the current tracing status of the related component, wherein the related components are divided into conflicting component whose tracing function is used by multiple tracing requests and non-conflicting component whose tracing function is used by one tracing request according to the detection result;
not sending a command of deactivating the tracing function to the related component whose tracing function is used by multiple tracing requests; and sending (B41) a command of deactivating the tracing function to the related component whose tracing function is used by one tracing request, executing (B51) the command of deactivating the tracing function for the corresponding component to deactivate the tracing function of the component.

2. The service tracing control method according to claim 1, further comprising:
if the tracing function of the related component is activated, updating (A53) the current tracing status of the related component according to the request of activating service tracing function; and
if the tracing function of the related component is deactivated, updating (A52) the current tracing status of the related component according to results of executing the command of activating the tracing function.

3. The service tracing control method according to claim 1, further comprising:
if the tracing function of the related component is used by multiple tracing requests, updating (B53) the current tracing status of the related component according to the deactivating service tracing function request; and
if the tracing function of the related component is used by one tracing request, updating (B52) the current tracing status of the related component according to results of executing the command of deactivating the tracing function.

4. The service tracing control method according to any one of claims 1 to 3, wherein the conflict detection is performed by querying a tracing status table which records the times of invoking a component whose tracing function is activated.

5. A service tracing control method, comprising:
receiving (C1, D1) a service tracing control request which specifies a function control requirement related to the service;
querying (C2, D2) dependency of a requested service to obtain information of related component of the requested service;
sending (C3, D3) a service tracing control command to the corresponding related component;
**characterized by**:
when the service tracing control request specifies the service-related function control requirement "activating the tracing function",
performing (C4) a conflict detection for the related component according to the command of activating the tracing function, and judging whether the function control requirement "activating the tracing function" conflicts with the current tracing status of the related component, wherein if the tracing function of the component is activated, the conflict exists; if the tracing function of the component is deactivated, no conflict exists
not executing the command of activating the tracing function on the related component whose tracing function is already activated; and executing (C51) the command of activating the tracing function on the related component whose tracing function is deactivated;
when the service tracing control request specifies the service-related function control requirement "deactivating the tracing function",
performing (D4) a conflict detection for the related component according to the command of deactivating the tracing function, and judging whether the function control requirement "deactivating the tracing function" conflicts with the current tracing status of the related component, wherein if the tracing function of the component is used by multiple tracing requests, the conflict exists; if the tracing function of the component is used by one tracing request, no conflict exists;
not executing the command of deactivating the tracing function on the related component whose tracing function is used by multiple tracing requests; and executing (D51) the command of deactivating the tracing function on the related component whose tracing function is used by one tracing request.

6. The service tracing control method according to claim 5, further comprising:
if the tracing function of the related component is already activated, updating (C62) the current tracing status of the related component according to the activating the tracing function request; and
if the tracing function of the related component is deactivated, updating (C61) the current tracing status of the related component according to the result of executing the command of activating the tracing function.

7. The service tracing control method according to claim 5, further comprising:
if the tracing function of the related component is used by multiple tracing requests, updating (D62) the current tracing status of the related component according to deactivating the tracing function request; and
if the tracing function of the related component is used by one tracing request, updating (D61) the current tracing status of the related component according to the results of executing the command of deactivating the tracing function.

8. The service tracing control method according to any one of claims 5-7, wherein the conflict detection is performed by querying a tracing status table which records the times of invoking a component whose tracing function is activated.

9. A tracing system, comprising a tracing control server (1), a service database (3), a tracing agent (2), and a Tracing Conflict Management (4),TCM, wherein:
the tracing control server (1) is adapted to receive service tracing control request which specifies a function control requirement related to the service, the service tracing control requests including a request of activating the service tracing function or
a request of deactivating the service tracing function; send a request of querying a dependency of a requested service to the service database (3) about the related component of the requested service, send a conflict detection request to the TCM, the conflict detection request currying the information of the related component and the relevant tracing control request; and send a service tracing control command to the tracing agent (2) of the related component detected as non-conflicting by the TCM (4) and feed back received result of executing the service tracing control command to the TCM (4); not to send a service tracing control command to the related component detected as conflicting by the TCM (4);
the service database (3) is adapted to query a dependency of a requested service to provide the tracing control server (1) with the information of related component of the service after receiving the query request from the tracing control server (1); and
the TCM (4) is adapted to receive a conflict detection request carrying the information of the related component and the function control requirement related to the service in the service tracing control request; detect whether the function control requirement related to the service in the service tracing control request conflicts with a current tracing status of the related component of the service; divide a list of the related component sent by the tracing control server (1) into two new lists, a list of conflicting component and a list of non-conflicting component after the conflict detection,
wherein for a tracing control request of the activating type, the two lists refer to a list of conflicting components whose tracing function is activated and a list of non-conflicting components whose tracing function is deactivated; for a tracing control request of the deactivating type, the two lists refer to a list of conflicting components whose tracing function is used by multiple tracing requests and a list of non-conflicting components whose tracing function is used by one tracing request; and feed back the detection result which carries the non-conflicting component to the tracing control server (1);
the tracing agent (2) is adapted to perform the service tracing control for the corresponding component according to the service tracing control command sent by the tracing control server (1); and feed back the result of executing the service tracing control command.

10. The tracing system according to claim 9, wherein:
the TCM (4) is adapted to update the current tracing status of the related component, and update the current tracing status of the related component detected as conflicting according to the service tracing request;
update the current tracing status of the related component detected as non-conflicting according to a received result of executing the service tracing control command.

11. A tracing system, comprising a tracing control server (5), a service database (7), a tracing agent (6) and a TCM (8), wherein:
the tracing control server (5) is adapted to receive service tracing control requests which carry the requested service and the service-related function control requirement; send a request of querying dependency of a requested service to the service database (7); and send a service tracing control command to the tracing agent (6) of the related component according to the information of non-conflicting related component fed back by the service database (7), and feed back the result of executing the service tracing control command to the service database (7);
the service database (7) is adapted to query information of the related component of the requested service after receiving the query request from the tracing control server (5); send a conflict detection request to the TCM (8), the conflict detection request carrying information of the related component and the function control requirement related to the service; and feed back the information of non-conflicting related component returned by the TCM (8) to the tracing control server (5), and forward the result of executing the service tracing control command returned by the tracing control server (5) to the TCM (8);
the TCM (8) is adapted to receive the conflict detection request sent by the service database (7); judge whether the tracing function control requirement conflicts with the current tracing status of the related component; divide a list of the related component into two groups, a list of conflicting component and a list of non-conflicting component after the conflict detection, wherein for a tracing control request of the activating type, the two lists refer to a list of conflicting components whose tracing function is activated and a list of non-conflicting components whose tracing function is deactivated; for a tracing control request of the deactivating type, the two lists refer to a list of conflicting components whose tracing function is used by multiple tracing request and a list of non-conflicting components whose tracing function is used by one tracing request; and feed back the detection results that carry the information of the non-conflicting related component to the service database (7);
the tracing agent (6) is adapted to perform the service tracing control for the corresponding component according to the service tracing control command sent by the tracing control server (5), and feed back the result of executing the service tracing control command.

12. The tracing system according to claim 11, wherein
the TCM (8) is adapted to update the current tracing status of the conflicting component according to the function control requirement related to the service, and update the current tracing status of the non-conflicting component according to the result of executing the service tracing control command fed back by the service database (7).

13. A tracing system,
comprising a tracing control server (9), a service database (11), a tracing agent (10) and a Tracing Conflict Management ,TCM, (12), wherein
the tracing control server (9) is adapted to receive service tracing control requests; query the service database (11) about the related component of the requested service; send the corresponding service tracing control command to the tracing agent (10) of the related component according to the conflict detection result of the related component fed back by the TCM (12), and feed back the result of executing the service tracing control command to the TCM (12);
the service database (11) is adapted to query information of the related component of the requested service after receiving the query request from the tracing control server (9); and send a conflict detection request to the TCM (12), the conflict detection request carrying information of the related component and the function control requirement in the service tracing control request;
the TCM (12) is adapted to receive the conflict detection request sent by the service database (11); judge whether the tracing function control request conflicts with the current tracing status of each related component; divide a list of the related component into two groups, a list of conflicting component and a list of non-conflicting component after the conflict detection, wherein for a tracing control request of the activating type, the two lists refer to a list of conflicting components whose tracing function is activated and a list of non-conflicting components whose tracing function is deactivated; for a tracing control request of the deactivating type, the two lists refer to a list of conflicting components whose tracing function is used by multiple tracing requests and a list of non-conflicting components whose tracing function is used by one tracing request; and feed back the detection results that carry the information of the non-conflicting related component to the tracing control server (9);
the tracing agent (10) is adapted to perform service tracing control for the corresponding component according to the service tracing control command sent by the tracing control server (9); and feed back the result of executing the service tracing control command.

14. A tracing control server, comprising a tracing control module (n11) and a Tracing Conflict Management (n12),TCM, wherein:
the tracing control module (n11) is adapted to: receive a service tracing control request which specifies a function control requirement related to the service; query to obtain information of related component of the requested service; send the information of related component of the service and a function control requirement related to the service in the service tracing control request to the TCM (n12); and send a service tracing control command to the related component detected as non-conflicting by the TCM (n12) and feed back received result of executing the service tracing control command to the TCM (n12); not send service tracing control command to the related component detected as conflicting by the TCM (n12); and
the TCM (n12) is adapted to detect whether the function control requirement in the service tracing control request conflict with the current tracing status of the related component of the service, divide the list of the related component into two groups, a list of conflicting component and a list of non-conflicting component after the conflict detection, wherein for a tracing control request of the activating type, the two lists refer to a list of conflicting components whose tracing function is activated and a list of non-conflicting components whose tracing function is deactivated; for a tracing control request of the deactivating type, the two lists refer to a list of conflicting components whose tracing function is used by multiple tracing requests and a list of non-conflicting components whose tracing function is used by one tracing request; and feed back the result of the conflict detection that carry the information of non-conflicting related component to the tracing control module (n 11).

15. A tracing agent set in a component, comprising a tracing processing module (k11) and a Tracing Conflict Management (k12), TCM, wherein:
the tracing processing module (k11) is adapted to receive a service tracing control command; send a function control requirement related to the service in the service tracing control command to the TCM (k12); and execute the service tracing control command and feed back the result of executing the service tracing control command to the TCM (k12) if the detection result fed back by the TCM (k12) indicates no conflict, and not execute the service tracing control command if the detection result indicates a conflict; and
the TCM (k12) is adapted to detect whether the function control requirement in the service tracing control request conflicts with a current tracing status of the related component, divide the list of the related component into two groups, a list of conflicting component and a list of non-conflicting component after the conflict detection, wherein for a tracing control request of the activating type, the two lists refer to a list of conflicting components whose tracing function is activated and a list of non-conflicting components whose tracing function is deactivated; for a tracing control request of the deactivating type, the two lists refer to a list of conflicting components whose tracing function is used by multiple tracing requests and a list of non-conflicting components whose tracing function is used by one tracing request; and feed back the detection result carrying non-conflicting component to the tracing processing module (k11).

## Patentansprüche

1. Dienst-Tracing-Steuerverfahren, umfassend:
Empfangen (A1, B1) einer Dienst-Tracing-Steueranforderung, die ein den Dienst betreffendes Funktionssteuererfordernis spezifiziert;
Abfragen (A2, B2) einer Abhängigkeit eines angeforderten Dienstes, um Informationen einer betreffenden Komponente des angeforderten Dienstes zu erhalten;
**gekennzeichnet durch**:
wenn die Dienst-Tracing-Steueranforderung das den Dienst betreffende Funktionssteuererfordernis "Aktivieren der Tracing-Funktion" spezifiziert,
Durchführen (A3) einer Konfliktdetektion für die betreffende Komponente gemäß den Informationen der betreffenden Komponente und des den Dienst betreffenden Funktionssteuererfordernisses und Beurteilen, ob das Funktionssteuererfordernis "Aktivieren der Tracing-Funktion" mit dem aktuellen Tracing-Status der betreffenden Komponente kollidiert, wobei die betreffenden Komponenten gemäß dem Detektionsergebnis in eine kollidierende Komponente, deren Tracing-Funktion aktiviert ist, und eine nicht-kollidierende Komponente, deren Tracing-Funktion deaktiviert ist, unterteilt werden;
Nicht-Senden eines Befehls des Aktivierens der Tracing-Funktion zur betreffenden Komponente, deren Tracing-Funktion bereits aktiviert ist; und Senden (A41) eines Befehls des Aktivierens der Tracing-Funktion an die betreffende Komponente, deren Tracing-Funktion deaktiviert ist, Ausführen (A51) des Befehls des Aktivierens der Tracing-Funktion für die entsprechende Komponente, um die Tracing-Funktion der Komponente zu aktivieren;
wenn die Dienst-Tracing-Steueranforderung das den Dienst betreffende Funktionssteuererfordernis "Deaktivieren der Tracing-Funktion" spezifiziert, Durchführen (B3) einer Konfliktdetektion für die betreffende Komponente gemäß den Informationen der betreffenden Komponente und des den Dienst betreffenden Funktionssteuererfordernisses und Beurteilen, ob das Funktionssteuererfordernis "Deaktivieren der Tracing-Funktion" mit dem aktuellen Tracing-Status der betreffenden Komponente kollidiert, wobei die betreffenden Komponenten gemäß dem Detektionsergebnis in eine kollidierende Komponente, deren Tracing-Funktion von mehreren Tracing-Anforderungen verwendet wird, und eine nicht-kollidierende Komponente, deren Tracing-Funktion von einer Tracing-Anforderung verwendet wird, unterteilt werden;
Nicht-Senden eines Befehls des Deaktivierens der Tracing-Funktion an die betreffende Komponente, deren Tracing-Funktion von mehreren Tracing-Anforderungen verwendet wird; und Senden (B41) eines Befehls des Deaktivierens der Tracing-Funktion an die betreffende Komponente, deren Tracing-Funktion von einer Tracing-Anforderung verwendet wird, Ausführen (B51) des Befehls des Deaktivierens der Tracing-Funktion für die entsprechende Komponente, um die Tracing-Funktion der Komponente zu deaktivieren.

2. Dienst-Tracing-Steuerverfahren nach Anspruch 1, weiterhin umfassend:
falls die Tracing-Funktion der betreffenden Komponente aktiviert ist, Aktualisieren (A53) des aktuellen Tracing-Status der betreffenden Komponente gemäß der Anforderung des Aktivierens einer Dienst-Tracing-Funktion; und
falls die Tracing-Funktion der betreffenden Komponente deaktiviert ist, Aktualisieren (A52) des aktuellen Tracing-Status der betreffenden Komponente gemäß Ergebnissen des Ausführens des Befehls des Aktivierens der Tracing-Funktion.

3. Dienst-Tracing-Steuerverfahren nach Anspruch 1, weiterhin umfassend:
falls die Tracing-Funktion der betreffenden Komponente von mehreren Tracing-Anforderungen verwendet wird, Aktualisieren (B53) des aktuellen Tracing-Status der betreffenden Komponente gemäß der Anforderung zum Deaktivieren der Dienst-Tracing-Anforderung; und
falls die Tracing-Funktion der betreffenden Komponente von einer Tracing-Anforderung verwendet wird, Aktualisieren (B52) des aktuellen Tracing-Status der betreffenden Komponente gemäß Ergebnissen des Ausführens des Befehls des Deaktivierens der Tracing-Funktion.

4. Dienst-Tracing-Steuerverfahren nach einem der Ansprüche 1 bis 3, wobei die Konfliktdetektion durch Abfragen einer Tracing-Statustabelle, welche die Zeiten des Aufrufens einer Komponente, deren Tracing-Funktion aktiviert ist, aufzeichnet, durchgeführt wird.

5. Dienst-Tracing-Steuerverfahren, umfassend:
Empfangen (C1, D1) einer Dienst-Tracing-Steueranforderung, die ein den Dienst betreffendes Funktionssteuererfordernis spezifiziert;
Abfragen (C2, D2) einer Abhängigkeit eines angeforderten Dienstes, um Informationen einer betreffenden Komponente des angeforderten Dienstes zu erhalten;
Senden (C3, D3) eines Dients-Tracing-Steuerbefehls an die entsprechende betreffende Komponente;
**gekennzeichnet durch**:
wenn die Dienst-Tracing-Steueranforderung das den Dienst betreffende Funktionssteuererfordernis "Aktivieren der Tracing-Funktion" spezifiziert,
Durchführen (C4) einer Konfliktdetektion für die betreffende Komponente gemäß dem Befehl des Aktivierens der Tracing-Funktion und Beurteilen, ob das Funktionssteuererfordernis "Aktivieren der Tracing-Funktion" mit dem aktuellen Tracing-Status der betreffenden Komponente kollidiert, wobei, falls die Tracing-Funktion der Komponente aktiviert ist, der Konflikt existiert; falls die Tracing-Funktion der Komponente deaktiviert ist, existiert kein Konflikt
Nicht-Ausführen des Befehls des Aktivierens der Tracing-Funktion an der betreffenden Komponente, deren Tracing-Funktion bereits aktiviert ist; und Ausführen (C51) des Befehls des Aktivierens der Tracing-Funktion an der betreffenden Komponente, deren Tracing-Funktion deaktiviert ist;
wenn die Dienst-Tracing-Steueranforderung das den Dienst betreffende Funktionssteuererfordernis "Deaktivieren der Tracing-Funktion" spezifiziert,
Durchführen (D4) einer Konfliktdetektion für die betreffende Komponente gemäß dem Befehl des Deaktivierens der Tracing-Funktion und Beurteilen, ob das Funktionssteuererfordernis "Deaktivieren der Tracing-Funktion" mit dem aktuellen Tracing-Status der betreffenden Komponente kollidiert, wobei, falls die Tracing-Funktion der Komponente von mehreren Tracing-Anforderungen verwendet wird, der Konflikt existiert; falls die Tracing-Funktion der Komponente von einer Tracing-Anforderung verwendet wird, existiert kein Konflikt;
Nicht-Ausführen des Befehls des Deaktivierens der Tracing-Funktion an der betreffenden Komponente, deren Tracing-Funktion von mehreren Tracing-Anforderungen verwendet wird; und Ausführen (D51) des Befehls des Deaktivierens der Tracing-Funktion an der betreffenden Komponente, deren Tracing-Funktion von einer Tracing-Anforderung verwendet wird.

6. Dienst-Tracing-Steuerverfahren nach Anspruch 5, weiterhin umfassend:
falls die Tracing-Funktion der betreffenden Komponente bereits aktiviert ist, Aktualisieren (C62) des aktuellen Tracing-Status der betreffenden Komponente gemäß dem Aktivieren der Tracing-Funktionsanforderung; und
falls die Tracing-Funktion der betreffenden Komponente deaktiviert ist, Aktualisieren (C61) des aktuellen Tracing-Status der betreffenden Komponente gemäß dem Ergebnis des Ausführens des Befehls des Aktivierens der Tracing-Funktion.

7. Dienst-Tracing-Steuerverfahren nach Anspruch 5, weiterhin umfassend:
falls die Tracing-Funktion der betreffenden Komponente von mehreren Tracing-Anforderungen verwendet wird, Aktualisieren (D62) des aktuellen Tracing-Status der betreffenden Komponente gemäß dem Deaktivieren der Tracing-Funktionsanforderung; und
falls die Tracing-Funktion der betreffenden Komponente von einer Tracing-Anforderung verwendet wird, Aktualisieren (D61) des aktuellen Tracing-Status der betreffenden Komponente gemäß den Ergebnissen des Ausführens des Befehls des Deaktivierens der Tracing-Funktion.

8. Dienst-Tracing-Steuerverfahren nach einem der Ansprüche 5-7, wobei die Konfliktdetektion durch Abfragen einer Tracing-Statustabelle, welche die Zeiten des Aufrufens einer Komponente, deren Tracing-Funktion aktiviert ist, aufzeichnet, durchgeführt wird.

9. Tracing-System, umfassend einen Tracing-Steuerserver (1), eine Dienstdatenbank (3), einen Tracing-Agenten (2) und ein Tracing Conflict Management (4), TCM, wobei:
der Tracing-Steuerserver (1) ausgelegt ist zum Empfangen einer Dienst-Tracing-Steueranforderung, die ein den Dienst betreffendes Funktionssteuererfordernis spezifiziert, wobei die Dienst-Tracing-Steueranforderungen eine Anforderung des Aktivierens der Dienst-Tracing-Funktion oder eine Anforderung des Deaktivierens der Dienst-Tracing-Funktion enthalten; Senden einer Anforderung des Abfragens einer Abhängigkeit eines angeforderten Dienstes an die Dienstdatenbank (3) über die betreffende Komponente des angeforderten Dienstes: Senden einer Konfliktdetektionsanforderung an das TCM, wobei die Konfliktdetektionsanforderung die Informationen der betreffenden Komponente und die relevante Tracing-Steueranforderung führt; und Senden eines Dienst-Tracing-Steuerbefehls an den Tracing-Agenten (2) der betreffenden Komponente, die vom TCM (4) als nicht kollidierend detektiert wurde, und Zurückleiten eines empfangenen Ergebnisses des Ausführens des Dienst-Tracing-Steuerbefehls an das TCM (4); Nicht-Senden eines Dienst-Tracing-Steuerbefehls an die betreffende Komponente, die vom TCM (4) als kollidierend detektiert wurde;
die Dienstdatenbank (3) ausgelegt ist zum Abfragen einer Abhängigkeit eines angeforderten Dienstes zum Ausstatten des Tracing-Steuerservers (1) mit den Informationen der betreffenden Komponente des Dienstes nach dem Empfangen der Abfrageanforderung vom Tracing-Steuerserver (1); und
das TCM (4) ausgelegt ist zum Empfangen einer Konfliktdetektionsanforderung, welche die Informationen der betreffenden Komponente und des den Dienst betreffenden Funktionssteuererfordernisses in der Dienst-Tracing-Steueranforderung führt; Detektieren, ob das den Dienst betreffende Funktionssteuererfordernis in der Dienst-Tracing-Steueranforderung mit einem aktuellen Tracing-Status der betreffenden Komponente des Dienstes kollidiert; Unterteilen einer vom Tracing-Steuerserver (1) gesendeten Liste der betreffenden Komponente in zwei neue Listen, eine Liste einer kollidierenden Komponente und eine Liste einer nicht-kollidierenden Komponente nach der Konfliktdetektion, wobei für eine Tracing-Steueranforderung vom aktivierenden Typ die beiden Listen sich auf eine Liste von kollidierenden Komponenten, deren Tracing-Funktion aktiviert ist, und eine Liste von nicht-kollidierenden Komponenten, deren Tracing-Funktion deaktiviert ist, beziehen; für eine Tracing-Steueranforderung vom deaktivierenden Typ beziehen sich die beiden Listen auf eine Liste von kollidierenden Komponenten, deren Tracing-Funktion von mehreren Tracing-Anforderungen verwendet wird, und eine Liste von nicht-kollidierenden Komponenten, deren Tracing-Funktion von einer Tracing-Anforderung verwendet wird; und Zurückleiten des Detektionsergebnisses, das die nicht-kollidierende Komponente führt, an den Tracing-Steuerserver (1);
der Tracing-Agent (2) ausgelegt ist zum Durchführen der Dienst-Tracing-Steuerung für die entsprechende Komponente gemäß dem vom Tracing-Steuerserver (1) gesendeten Dienst-Tracing-Steuerbefehl; und Zurückleiten des Ergebnisses des Ausführens des Dienst-Tracing-Steuerbefehls.

10. Tracing-System nach Anspruch 9, wobei:
das TCM (4) ausgelegt ist zum Aktualisieren des aktuellen Tracing-Status der betreffenden Komponente und Aktualisieren des aktuellen Tracing-Status der betreffenden Komponente, die gemäß der Dienst-Tracing-Anforderung als kollidierend detektiert wurde;
Aktualisieren des aktuellen Tracing-Status der betreffenden Komponente, die gemäß einem empfangenen Ergebnis des Ausführens des Dienst-Tracing-Steuerbefehls als nicht-kollidierend detektiert wurde.

11. Tracing-System, umfassend einen Tracing-Steuerserver (5), eine Dienstdatenbank 7 einen Tracing-Agenten (6) und ein TCM (8), wobei:
der Tracing-Steuerserver (5) ausgelegt ist zum Empfangen von Dienst-Tracing-Steueranforderungen, die den angeforderten Dienst und das einen Dienst betreffende Funktionssteuererfordernis führen; Senden einer Anforderung des Abfragens der Abhängigkeit eines angeforderten Dienstes an die Dienstdatenbank (7); und Senden eines Dienst-Tracing-Steuerbefehls an den Tracing-Agenten (6) der betreffenden Komponente gemäß den durch die Dienstdatenbank (7) zurückgeleiteten Informationen einer nicht-kollidierenden betreffenden Komponente, und Zurückleiten des Ergebnisses des Ausführens des Dienst-Tracing-Steuerbefehls an die Dienstdatenbank (7);
die Dienstdatenbank (7) ausgelegt ist zum Abfragen von Informationen der betreffenden Komponente des angeforderten Dienstes nach Empfangen der Abfrageanforderung vom Tracing-Steuerserver (5); Senden einer Konfliktdetektionsanforderung an das TCM (8), wobei die Konfliktdetektionsanforderung Informationen der betreffenden Komponente und des den Dienst betreffenden Funktionssteuererfordernisses führt; und Zurückleiten der Informationen einer nicht-kollidierenden betreffenden, vom TCM (8) zurückgesendeten Komponente an den Tracing-Steuerserver (5), und Weiterleiten des vom Tracing-Steuerserver (5) zurückgesendeten Ergebnisses des Ausführens des Dienst-Tracing-Steuerbefehls an das TCM (8);
das TCM (8) ausgelegt ist zum Empfangen der von der Dienstdatenbank (7) gesendeten Konfliktdetektionsanforderung; Beurteilen, ob das Tracing-Funktionssteuererfordernis mit dem aktuellen Tracing-Status der betreffenden Komponente kollidiert; Unterteilen einer Liste der betreffenden Komponente in zwei Gruppen, eine Liste einer kollidierenden Komponente und eine Liste einer nicht-kollidierenden Komponente nach der Konfliktdetektion, wobei für eine Tracing-Steueranforderung vom aktivierenden Typ sich die beiden Listen auf eine Liste von kollidierenden Komponenten, deren Tracing-Funktion aktiviert ist, und eine Liste von nicht-kollidierenden Komponenten, deren Tracing-Funktion deaktiviert ist, beziehen; für eine Tracing-Steueranforderung vom deaktivierenden Typ beziehen sich die beiden Listen auf eine Liste von kollidierenden Komponenten, deren Tracing-Funktion von mehreren Tracing-Anforderungen verwendet wird, und eine Liste von nicht-kollidierenden Komponenten, deren Tracing-Funktion von einer Tracing-Anforderung verwendet wird; und Zurückleiten der Detektionsergebnisse, welche die Informationen der nicht-kollidierenden betreffenden Komponente führen, an die Dienstdatenbank (7);
der Tracing-Agent (6) ausgelegt ist zum Durchführen der Dienst-Tracing-Steuerung für die entsprechende Komponente gemäß dem vom Tracing-Steuerserver (5) gesendeten Dienst-Tracing-Steuerbefehl und Zurückleiten des Ergebnisses des Ausführens des Dienst-Tracing-Steuerbefehls.

12. Tracing-System nach Anspruch 11, wobei
das TCM (8) ausgelegt ist zum Aktualisieren des aktuellen Tracing-Status der kollidierenden Komponente gemäß dem den Dienst betreffenden Funktionssteuererfordernis und Aktualisieren des aktuellen Tracing-Status der nicht-kollidierenden Komponente gemäß dem von der Dienstdatenbank (7) zurückgeleiteten Ergebnis des Ausführens des Dienst-Tracing-Steuerbefehls.

13. Tracing-System,
umfassend einen Tracing-Steuerserver (9), eine Dienstdatenbank (11), einen Tracing-Agenten (10) und ein Tracing Conflict Management, TCM, (12), wobei
der Tracing-Steuerserver (9) ausgelegt ist zum Empfangen von Dienst-Tracing-Steueranforderungen; Abfragen der Dienstdatenbank (11) über die betreffende Komponente des angeforderten Dienstes; Senden des entsprechenden Dienst-Tracing-Steuerbefehls an den Tracing-Agenten (10) der betreffenden Komponente gemäß dem vom TCM (12) zurückgeleiteten Konfliktdetektionsergebnis der betreffenden Komponente und Zurückleiten des Ergebnisses des Ausführens des Dienst-Tracing-Steuerbefehls an das TCM (12);
die Dienstdatenbank (11) ausgelegt ist zum Abfragen von Informationen der betreffenden Komponente des angeforderten Dienstes nach dem Empfangen der Abfrageanforderung vom Tracing-Steuerserver (9); und Senden einer Konfliktdetektionsanforderung an das TCM (12), wobei die Konfliktdetektionsanforderung Informationen der betreffenden Komponente und des Funktionssteuererfordernisses in der Dienst-Tracing-Steueranforderung führt;
das TCM (12) ausgelegt ist zum Empfangen der von der Dienstdatenbank (11) gesendeten Konfliktdetektionsanforderung; Beurteilen, ob die Tracing-Funktionssteueranforderung mit dem aktuellen Tracing-Status jeder betreffenden Komponente kollidiert; Unterteilen einer Liste der betreffenden Komponente in zwei Gruppen, eine Liste einer kollidierenden Komponente und eine Liste einer nicht-kollidierenden Komponente nach der Konfliktdetektion, wobei für eine Tracing-Steueranforderung vom aktivierenden Typ sich die beiden Listen auf eine Liste von kollidierenden Komponenten, deren Tracing-Funktion aktiviert ist, und eine Liste von nicht-kollidierenden Komponenten, deren Tracing-Funktion deaktiviert ist, beziehen; für eine Tracing-Steueranforderung vom deaktivierenden Typ beziehen sich die beiden Listen auf eine Liste von kollidierenden Komponenten, deren Tracing-Funktion von mehreren Tracing-Anforderungen verwendet wird, und eine Liste von nicht-kollidierenden Komponenten, deren Tracing-Funktion von einer Tracing-Anforderung verwendet wird; und Zurückleiten der Detektionsergebnisse, die die Informationen der nicht-kollidierenden betreffenden Komponente führen, an den Tracing-Steuerserver (9);
der Tracing-Agent (10) ausgelegt ist zum Durchführen einer Dienst-Tracing-Steuerung für die entsprechende Komponente gemäß dem vom Tracing-Steuerserver (9) gesendeten Dienst-Tracing-Steuerbefehl; und Zurückleiten des Ergebnisses des Ausführens des Dienst-Tracing-Steuerbefehls.

14. Tracing-Steuerserver, umfassend ein Tracing-Steuermodul (n11) und ein Tracing Conflict Management (n12), TCM, wobei:
das Tracing-Steuermodul (n11) ausgelegt ist zum: Empfangen einer Dienst-Tracing-Steueranforderung, die ein den Dienst betreffendes Funktionssteuererfordernis spezifiziert; Abfragen zum Erhalten von Informationen einer betreffenden Komponente des angeforderten Dienstes; Senden der Informationen der betreffenden Komponente des Dienstes und ein den Dienst betreffendes Funktionssteuererfordernis in der Dienst-Tracing-Steueranforderung an das TCM (n12); und Senden eines Dienst-Tracing-Steuerbefehls an die betreffende Komponente, die vom TCM (n12) als nicht-kollidierend detektiert wurde, und Zurückleiten eines empfangenen Ergebnisses des Ausführens des Dienst-Tracing-Steuerbefehls an das TCM (n12); Nicht-Senden eines Dienst-Tracing-Steuerbefehls an die betreffende Komponente, die vom TCM (n12) als kollidierend detektiert wurde; und
das TCM (n12) ausgelegt ist zum Detektieren, ob das Funktionssteuererfordernis in der Dienst-Tracing-Steueranforderung mit dem aktuellen Tracing-Status der betreffenden Komponente des Dienstes kollidiert, Unterteilen der Liste der betreffenden Komponente in zwei Gruppen, eine Liste einer kollidierenden Komponente und eine Liste einer nicht-kollidierenden Komponente nach der Konfliktdetektion, wobei für eine Tracing-Steueranforderung vom aktivierenden Typ sich die beiden Listen auf eine Liste von kollidierenden Komponenten, deren Tracing-Funktion aktiviert ist, und eine Liste von nicht-kollidierenden Komponenten, deren Tracing-Funktion deaktiviert ist, beziehen; für eine Tracing-Steueranforderung vom deaktivierenden Typ beziehen sich die beiden Listen auf eine Liste von kollidierenden Komponenten, deren Tracing-Funktion von mehreren Tracing-Anforderungen verwendet wird, und eine Liste von nicht-kollidierenden Komponenten, deren Tracing-Funktion von einer Tracing-Anforderung verwendet wird; und Zurückleiten des Ergebnisses der Konfliktdetektion, das die Informationen einer nicht-kollidierenden betreffenden Komponente führt, an das Tracing-Steuermodul (n11).

15. Tracing-Agent, eingesetzt in eine Komponente, umfassend ein Tracing-Verarbeitungsmodul (k11) und ein Tracing Conflict Management (k12), TCM, wobei:
das Tracing-Verarbeitungsmodul (k11) ausgelegt ist zum Empfangen eines Dienst-Tracing-Steuerbefehls; Senden eines den Dienst betreffenden Funktionssteuererfordernisses im Dienst-Tracing-Steuerbefehl an das TCM (k12); und Ausführen des Dienst-Tracing-Steuerbefehls und Zurückleiten des Ergebnisses des Ausführens des Dienst-Tracing-Steuerbefehls an das TCM (k12), falls das vom TCM (k12) zurückgeleitete Detektionsergebnis keinen Konflikt anzeigt, und Nicht-Ausführen des Dienst-Tracing-Steuerbefehls, falls das Detektionsergebnis einen Konflikt anzeigt; und
das TCM (k12) ausgelegt ist zum Detektieren, ob das Funktionssteuererfordernis in der Dienst-Tracing-Steueranforderung mit einem aktuellen Tracing-Status der betreffenden Komponente kollidiert, Unterteilen der Liste der betreffenden Komponente in zwei Gruppen, eine Liste einer kollidierenden Komponente und eine Liste einer nicht-kollidierenden Komponente nach der Konfliktdetektion, wobei für eine Tracing-Steueranforderung vom aktivierenden Typ sich die beiden Listen auf eine Liste von kollidierenden Komponenten, deren Tracing-Funktion aktiviert ist, und eine Liste von nicht-kollidierenden Komponenten, deren Tracing-Funktion deaktiviert ist, beziehen; für eine Tracing-Steueranforderung vom deaktivierenden Typ beziehen sich die beiden Listen auf eine Liste von kollidierenden Komponenten, deren Tracing-Funktion von mehreren Tracing-Anforderungen verwendet wird, und eine Liste von nicht-kollidierenden Komponenten, deren Tracing-Funktion von einer Tracing-Anforderung verwendet wird; und Zurückleiten des eine nicht-kollidierende Komponente führenden Detektionsergebnisses an das Tracing-Verarbeitungsmodul (k11).

## Revendications

1. Procédé de commande de traçage de service, comprenant:
la réception (A1, B1) d'une requête de commande de traçage de service qui spécifie un besoin de commande de fonction associé au service;
l'interrogation (A2, B2) d'une dépendance d'un service requis afin d'obtenir des informations d'une composante associée du service requis;
**caractérisé par**:
quand la requête de commande de traçage de service spécifie le besoin de commande de fonction associé au service "activer la fonction de traçage",
la réalisation (A3) d'une détection de conflit de la composante associée en fonction des informations de la composante associée et du besoin de commande de fonction associé au service et le jugement si le besoin de commande de fonction "activer la fonction de traçage" est ou non en conflit avec l'état de traçage actuel de la composante associée, les composantes associées étant divisées en une composante conflictuelle dont la fonction de traçage est activée et une composante non conflictuelle dont la fonction de traçage est désactivée en fonction du résultat de la détection;
le non-envoi d'une instruction d'activation de la fonction de traçage à la composante associée dont la fonction de traçage est déjà activée; et l'envoi (A41) d'une instruction d'activation de la fonction de traçage à la composante associée dont la fonction de traçage est désactivée, l'exécution (A51) de l'instruction d'activation de la fonction de traçage pour la composante correspondante afin d'activer la fonction de traçage de la composante;
quand la requête de commande de traçage de service spécifie le besoin de commande de fonction associé au service "désactiver la fonction de traçage",
la réalisation (B3) d'une détection de conflit de la composante associée en fonction des informations de la composante associée et du besoin de commande de fonction associé au service, et le jugement si le besoin de commande de fonction "désactiver la fonction de traçage" est ou non en conflit avec l'état de traçage actuel de la composante associée, les composantes associées étant divisées en une composante conflictuelle dont la fonction de traçage est utilisée par de multiples requêtes de traçage et une composante non conflictuelle dont la fonction de traçage est utilisée par une seule requête de traçage en fonction du résultat de la détection;
le non-envoi d'une instruction de désactivation de la fonction de traçage à la composante associée dont la fonction de traçage est utilisée par de multiples requêtes de traçage; et l'envoi (B41) d'une instruction de désactivation de la fonction de traçage à la composante associée dont la fonction de traçage est utilisée par une seule requête de traçage, l'exécution (B51) de l'instruction de désactivation de la fonction de traçage pour la composante correspondante afin de désactiver la fonction de traçage de la composante.

2. Procédé de commande de traçage de service selon la revendication 1, comprenant en outre:
si la fonction de traçage de la composante associée est activée, l'actualisation (A53) de l'état de traçage actuel de la composante associée en fonction de la requête d'activation de la fonction de traçage de service; et
si la fonction de traçage de la composante associée est désactivée, l'actualisation (A52) de l'état de traçage actuel de la composante associée en fonction des résultats de l'exécution de l'instruction d'activation de la fonction de traçage.

3. Procédé de commande de traçage de service selon la revendication 1, comprenant en outre:
si la fonction de traçage de la composante associée est utilisée par de multiples requêtes de traçage, l'actualisation (B53) de l'état de traçage actuel de la composante associée en fonction de la requête de désactivation de la fonction de traçage de service; et
si la fonction de traçage de la composante associée est utilisée par une seule requête de traçage, l'actualisation (B52) de l'état de traçage actuel de la composante associée en fonction des résultats de l'exécution de l'instruction de désactivation de la fonction de traçage.

4. Procédé de commande de traçage de service selon l'une quelconque des revendications 1 à 3, dans lequel la détection de conflit est réalisée en interrogeant une table d'états de traçage qui enregistre les temps d'appel d'une composante dont la fonction de traçage est activée.

5. Procédé de commande de traçage de service, comprenant:
la réception (C1, D1) d'une requête de commande de traçage de service qui spécifie un besoin de commande de fonction associé au service;
l'interrogation (C2, D2) d'une dépendance d'un service requis afin d'obtenir des informations d'une composante associée du service requis;
l'envoi (C3, D3) d'une instruction de commande de traçage de service à la composante associée correspondante;
**caractérisé par**:
quand la requête de commande de traçage de service spécifie le besoin de commande de fonction associé au service "activer la fonction de traçage",
la réalisation (C4) d'une détection de conflit de la composante associée en fonction de l'instruction d'activation de la fonction de traçage, et le jugement si le besoin de commande de fonction "activer la fonction de traçage" est ou non en conflit avec l'état de traçage actuel de la composante associée, dans lequel si la fonction de traçage de la composante est activée, il y a conflit; si la fonction de traçage de la composante est désactivée, il n'y a pas conflit
la non-exécution de l'instruction d'activation de la fonction de traçage sur la composante associée dont la fonction de traçage est déjà activée; et l'exécution (C51) de l'instruction d'activation de la fonction de traçage sur la composante associée dont la fonction de traçage est désactivée;
quand la requête de commande de traçage de service spécifie le besoin de commande de fonction associé au service "désactiver la fonction de traçage",
la réalisation (D4) d'une détection de conflit de la composante associée en fonction de l'instruction de désactivation de la fonction de traçage, et le jugement si le besoin de commande de fonction "désactiver la fonction de traçage" est ou non en conflit avec l'état de traçage actuel de la composante associée, dans lequel si la fonction de traçage de la composante est utilisée par de multiples requêtes de traçage, il y a conflit; si la fonction de traçage est utilisée par une seule requête de traçage, il n'y a pas conflit;
la non-exécution de l'instruction de désactivation de la fonction de traçage sur la composante associée dont la fonction de traçage est utilisée par de multiples requêtes de traçage; et l'exécution (D51) de l'instruction de désactivation de la fonction de traçage sur la composante associée dont la fonction de traçage est utilisée par une seule requête de traçage.

6. Procédé de commande de traçage de service selon la revendication 5, comprenant en outre:
si la fonction de traçage de la composante associée est déjà activée, l'actualisation (C62) de l'état de traçage actuel de la composante associée en fonction de la requête d'activation de la fonction de traçage; et
si la fonction de traçage de la composante associée est désactivée, l'actualisation (C61) de l'état de traçage actuel de la composante associée en fonction du résultat de l'exécution de l'instruction d'activation de la fonction de traçage.

7. Procédé de commande de traçage de service selon la revendication 5, comprenant en outre:
si la fonction de traçage de la composante associée est utilisée par de multiples requêtes de traçage, l'actualisation (D62) de l'état de traçage actuel de la composante associée en fonction de la requête de désactivation de la fonction de traçage; et
si la fonction de traçage de la composante associée est utilisée par une seule requête de traçage, l'actualisation (D61) de l'état de traçage actuel de la composante associée en fonction des résultats de l'exécution de l'instruction de désactivation de la fonction de traçage.

8. Procédé de commande de traçage de service selon l'une quelconque des revendications 5 à 7, dans lequel la détection de conflit est exécutée en interrogeant une table d'état de traçage qui enregistre les temps d'appel d'une composante dont la fonction de traçage est activée.

9. Système de traçage, comprenant un serveur de commande de traçage (1), une base de données de service (3), un agent de traçage (2), et une Gestion de Conflit de Traçage (4), TCM (*Tracing Conflict Management*), dans lequel:
le serveur de commande de traçage (1) est adapté pour recevoir une requête de commande de traçage de service qui spécifie un besoin de commande de fonction associé au service, la requête de commande de traçage de service comprenant une requête d'activation de la fonction de traçage de service ou une requête de désactivation de la fonction de traçage de service; envoyer une requête d'interrogation d'une dépendance d'un service requis à la base de données de service (3) concernant la composante associée du service requis; envoyer une requête de détection de conflit à la TCM, la requête de détection de conflit portant les informations de la composante associée et la requête de commande de traçage pertinente; et envoyer une instruction de commande de traçage de service à l'agent de traçage (2) de la composante associée détectée comme non conflictuelle par la TCM (4) et renvoyer le résultat reçu de l'exécution de l'instruction de commande de traçage de service à la TCM (4); ne pas envoyer une instruction de commande de traçage de service à la composante associée détectée comme conflictuelle par la TCM (4);
la base de données de service (3) est adaptée pour interroger une dépendance d'un service requis afin de fournir au serveur de commande de traçage (1) les informations de la composante associée du service après la réception de la requête d'interrogation depuis le serveur de commande de traçage (1); et
la TCM (4) est adaptée pour recevoir une requête de détection de conflit portant les informations de la composante associée et le besoin de commande de fonction associé au service dans la requête de commande de traçage de service; détecter si le besoin de commande de fonction associé au service dans la requête de commande de traçage de service est ou non en conflit avec un état de traçage actuel de la composante associée du service; diviser une liste de la composante associée envoyée par le serveur de commande de traçage (1) en deux nouvelles listes, une liste de composante conflictuelle et une liste de composante non conflictuelle après la détection de conflit, où pour une requête de commande de traçage du type activation, les deux listes se réfèrent à une liste de composantes conflictuelles dont la fonction de traçage est activée et une liste de composantes non conflictuelles dont la fonction de traçage est désactivée; pour une requête de commande de traçage du type désactivation, les deux listes se réfèrent à une liste de composantes conflictuelles dont la fonction de traçage est utilisée par de multiples requêtes de traçage et une liste de composantes non conflictuelles dont la fonction de traçage est utilisée par une seule requête de traçage; et renvoyer le résultat de détection qui porte la composante non conflictuelle au serveur de commande de traçage (1);
l'agent de traçage (2) est adapté pour effectuer la commande de traçage de service pour la composante correspondante en fonction de l'instruction de commande de traçage de service envoyée par le serveur de commande de traçage (1); et renvoyer le résultat de l'exécution de l'instruction de commande de traçage de service.

10. Système de traçage selon la revendication 9, dans lequel:
la TCM (4) est adaptée pour actualiser l'état de traçage actuel de la composante associée, et actualiser l'état de traçage actuel de la composante associée détectée comme conflictuelle en fonction de la requête de traçage de service;
actualiser l'état de traçage actuel de la composante associée détectée comme non conflictuelle en fonction d'un résultat reçu de l'exécution de l'instruction de commande de traçage de service.

11. Système de traçage, comprenant un serveur de commande de traçage (5), une base de données de service (7), un agent de traçage (6) et une TCM (8), dans lequel:
le serveur de commande de traçage (5) est adapté pour recevoir des requêtes de commande de traçage de service qui portent le service requis et le besoin de commande de fonction associé au service; envoyer une requête d'interrogation d'une dépendance d'un service requis à la base de données de service (7); et envoyer une instruction de commande de traçage de service à l'agent de traçage (6) de la composante associée en fonction des informations de la composante associée non conflictuelle renvoyées par la base de données de service (7), et renvoyer le résultat de l'exécution de l'instruction de commande de traçage de service à la base de données de service (7);
la base de données de service (7) est adaptée pour interroger des informations de la composante associée du service requis après avoir reçu la requête d'interrogation depuis le serveur de commande de traçage (5); envoyer une requête de détection de conflit à la TCM (8), la requête de détection de conflit portant des informations de la composante associée et du besoin de commande de fonction associé au service; et renvoyer les informations de la composante associée non conflictuelle renvoyées par la TCM (8) au serveur de commande de traçage (5) et acheminer le résultat de l'exécution de l'instruction de commande de traçage de service renvoyé par le serveur de commande de traçage (5) à la TCM (8);
la TCM (8) est adaptée pour recevoir la requête de détection de conflit envoyée par la base de données de service (7); juger si le besoin de commande de fonction de traçage est ou non en conflit avec l'état de traçage actuel de la composante associée; diviser une liste de la composante associée en deux groupes, une liste de composante conflictuelle et une liste de composante non conflictuelle après la détection de conflit, où pour une requête de commande de traçage du type activation, les deux listes se réfèrent à une liste de composantes conflictuelles dont la fonction de traçage est activée et une liste de composantes non conflictuelles dont la fonction de traçage est désactivée; pour une requête de commande de traçage du type désactivation, les deux listes se réfèrent à une liste de composantes conflictuelles dont la fonction de traçage est utilisée par de multiples requêtes de traçage et une liste de composantes non conflictuelles dont la fonction de traçage est utilisée par une seule requête de traçage; et renvoyer les résultats de détection qui portent les informations de la composante associée non conflictuelle à la base de données de service (7);
l'agent de traçage (6) est adapté pour effectuer la commande de traçage de service pour la composante correspondante en fonction de l'instruction de commande de traçage de service envoyée par le serveur de commande de traçage (5), et renvoyer le résultat de l'exécution de l'instruction de commande de traçage de service.

12. Système de traçage selon la revendication 11 dans lequel
la TCM (8) est adaptée pour actualiser l'état de traçage actuel de la composante conflictuelle en fonction du besoin de commande de fonction associé au service, et actualiser l'état de traçage actuel de la composante non conflictuelle en fonction du résultat de l'exécution de l'instruction de commande de traçage de service renvoyé par la base de données de service (7).

13. Système de traçage,
comprenant un serveur de commande de traçage (9), une base de données de service (11), un agent de traçage (10), et une Gestion de Conflit de Traçage, TCM (*Tracing Conflict Management*), (12), dans lequel
le serveur de commande de traçage (9) est adapté pour recevoir des requêtes de commande de traçage de service; interroger la base de données de service (11) au sujet de la composante associée du service requis; envoyer l'instruction de commande de traçage de service correspondante à l'agent de traçage (10) de la composante associée en fonction du résultat de détection de conflit de la composante associée renvoyé par la TCM (12), et renvoyer le résultat de l'exécution de l'instruction de commande de traçage de service à la TCM (12);
la base de données de service (11) est adaptée pour interroger des informations de la composante associée du service requis après avoir reçu la requête d'interrogation depuis le serveur de commande de traçage (9); et envoyer une requête de détection de conflit à la TCM (12), la requête de détection de conflit portant des informations de la composante associée et du besoin de commande de fonction dans la requête de commande de traçage de service;
la TCM (12) est adaptée pour recevoir la requête de détection de conflit envoyée par la base de données de service (11); juger si la requête de commande de fonction de traçage est ou non en conflit avec l'état de traçage actuel de chaque composante associée; diviser une liste de la composante associée en deux groupes, une liste de composante conflictuelle et une liste de composante non conflictuelle après la détection de conflit, où pour une requête de commande de traçage du type activation, les deux listes se réfèrent à une liste de composantes conflictuelles dont la fonction de traçage est activée et une liste de composantes non conflictuelles dont la fonction de traçage est désactivée; pour une requête de commande de traçage du type désactivation, les deux listes se réfèrent à une liste de composantes conflictuelles dont la fonction de traçage est utilisée par de multiples requêtes de traçage et une liste de composantes non conflictuelles dont la fonction de traçage est utilisée par une seule requête de traçage; et renvoyer les résultats de détection qui portent les informations de la composante associée non conflictuelle au serveur de commande de traçage (9);
l'agent de traçage (10) est adapté pour effectuer la commande de traçage de service pour la composante correspondante en fonction de l'instruction de commande de traçage de service envoyée par le serveur de commande de traçage (9); et renvoyer le résultat de l'exécution de l'instruction de commande de traçage de service.

14. Serveur de commande de traçage, comprenant un module de commande de traçage (n11) et une Gestion de Conflit de Traçage (n12), TCM (*Tracing Conflict Management*), dans lequel:
le module de commande de traçage (n11) est adapté pour: recevoir une requête de commande de traçage de service qui spécifie un besoin de commande de fonction associé au service; effectuer une interrogation pour obtenir des informations de la composante associée du service requis; envoyer les informations de la composante associée au service et d'un besoin de commande de fonction associé au service dans la requête de commande de traçage de service à la TCM (n12); et envoyer une instruction de commande de traçage de service à la composante associée détectée comme non conflictuelle par la TCM (n12) et renvoyer le résultat reçu de l'exécution de l'instruction de commande de traçage de service à la TCM (n12); ne pas envoyer l'instruction de commande de traçage de service à la composante associée détectée comme conflictuelle par la TCM (n 12); et
la TCM (n12) est adaptée pour détecter si le besoin de commande de fonction dans la requête de commande de traçage de service est ou non en conflit avec l'état de traçage actuel de la composante associée du service, diviser la liste de la composante associée en deux groupes, une liste de composante conflictuelle et une liste de composante non conflictuelle après la détection de conflit, où pour une requête de commande de traçage du type activation, les deux listes se réfèrent à une liste de composantes conflictuelles dont la fonction de traçage est activée et une liste de composantes non conflictuelles dont la fonction de traçage est désactivée; pour une requête de commande de traçage du type désactivation, les deux listes se réfèrent à une liste de composantes conflictuelles dont la fonction de traçage est utilisée par de multiples requêtes de traçage et une liste de composantes non conflictuelles dont la fonction de traçage est utilisée par une seule requête de traçage; et renvoyer le résultat de détection de conflit qui porte les informations de la composante associée non conflictuelle au module de commande de traçage (n11).

15. Agent de traçage placé dans un composant, comprenant un module de traitement de traçage (k11) et une Gestion de Conflit de Traçage (k12), TCM (*Traffic Conflict Management*)*,* dans lequel:
le module de traitement de traçage (k11) est adapté pour recevoir une instruction de commande de traçage de service; envoyer un besoin de commande de fonction associé au service dans l'instruction de commande de traçage de service à la TCM (k12); et exécuter l'instruction de commande de traçage de service et renvoyer le résultat de l'exécution de l'instruction de commande de traçage de service à la TCM (k12) si le résultat de détection renvoyé par la TCM (k12) indique l'absence de conflit, et ne pas exécuter l'instruction de commande de traçage de service si le résultat de détection indique la présence d'un conflit; et
la TCM (k12) est adaptée pour détecter si le besoin de commande de fonction dans l'instruction de commande de traçage de service est ou non en conflit avec un état de traçage actuel de la composante associée, diviser la liste de la composante associée en deux groupes, une liste de composante conflictuelle et une liste de composante non conflictuelle après la détection de conflit, où pour une requête de commande de traçage du type activation, les deux listes se réfèrent à une liste de composantes conflictuelles dont la fonction de traçage est activée et une liste de composantes non conflictuelles dont la fonction de traçage est désactivée; pour une requête de commande de traçage du type désactivation, les deux listes se réfèrent à une liste de composantes conflictuelles dont la fonction de traçage est utilisée par de multiples requêtes de traçage et une liste de composantes non conflictuelles dont la fonction de traçage est utilisée par une seule requête de traçage; et renvoyer le résultat de détection qui porte la composante non conflictuelle au module de traitement de traçage (k11).
